# EUROPÄISCHE PATENTSCHRIFT

(11) **EP 2 779 354 B1**
(45) Veröffentlichungstag und Bekanntmachung des Hinweises auf die Patenterteilung: **17.06.2020**
(21) Anmeldenummer: 14154602.8
(22) Anmeldetag: 11.02.2014
(51) Int. Cl.: H02J 7/00

(54) **Elektrisch eigensicheres Batteriemodul mit umpolbarer Ausgangsspannung und Verfahren zur Überwachung eines Batteriemoduls**
Electrical intrinsically safe battery module with pole-reversible output voltage, and a method for monitoring a battery module
Module de batterie électrique à sécurité intrinsèque avec tension de sortie à polarité inversable et procédé de surveillance d'un module de batterie

(30) Priorität: 15.03.2013 DE 102013204507
(43) Veröffentlichungstag der Anmeldung: 17.09.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: Fink, Holger, 70567 Stuttgart (DE)
(74) Vertreter: Bee, Joachim

(56) Entgegenhaltungen:
- WO-A2-2010/044883
- US-A1- 2011 198 936

## Beschreibung

### Bereich der Erfindung

Die vorliegende Erfindung betrifft ein Batteriemodul mit einer Batteriezellschaltung mit mehreren Batteriezellen und mit einer Überwachungs- und Ansteuerungseinheit zur Überwachung des Funktionszustands des Batteriemoduls. Auch betrifft die Erfindung ein Verfahren zur Überwachung eines Batteriemoduls mittels einer in dem Batteriemodul angeordneten Überwachungs- und Ansteuerungseinheit. Ferner betrifft die Erfindung ein Batteriesystem, das eine Batterie mit mindestens einem Batteriestrang, in dem mehrere Batteriemodule angeordnet sind, und ein Batteriemanagementsystem umfasst.

### Stand der Technik

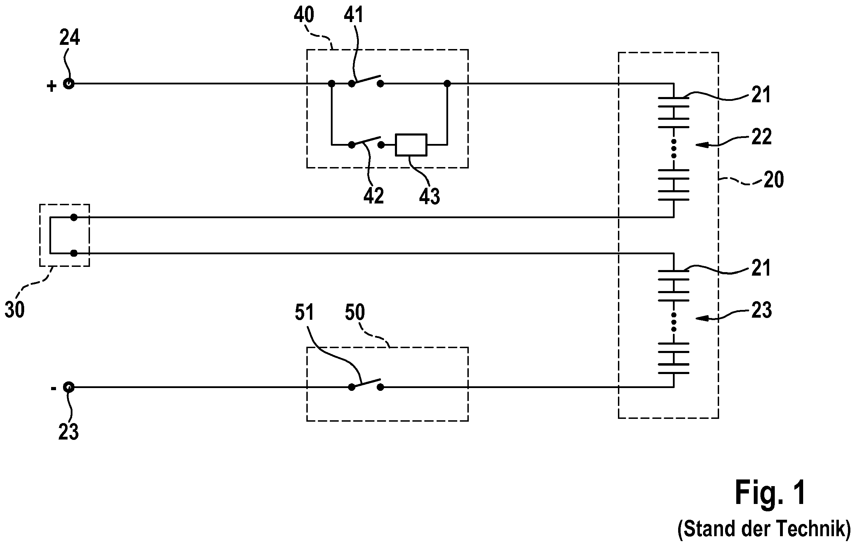

Es ist üblich, Batterien für den Einsatz in Hybrid- und Elektrofahrzeugen als Traktionsbatterien zu bezeichnen, da diese Batterien für die Speisung elektrischer Antriebe eingesetzt werden. Um die bei Hybrid- und Elektrofahrzeugen geforderten Leistungs- und Energiedaten zu erzielen, werden einzelne Batteriezellen in Serie und teilweise zusätzlich parallel geschaltet. Bei Elektrofahrzeugen werden häufig 10 Zellen oder mehr in Serie verschaltet und die Batterien weisen Spannungen bis zu 450 V auf. Auch bei Hybridfahrzeugen wird üblicherweise die Spanungsgrenze von 60 V überschritten, welche bei Berührung durch Menschen als unkritisch eingestuft wird. In der Figur 1 ist das Prinzipschaltbild eines Batteriesystems mit einer derartigen Traktionsbatterie 20 dargestellt. Die Batterie 20 umfasst mehrere Batteriezellen 21. Zur Vereinfachung der Darstellung in Figur 1 wurden nur zwei Batteriezellen mit dem Bezugszeichen 21 versehen. Traktionsbatterien in Hybrid- und Elektrofahrzeugen werden üblicherweise modular aufgebaut. Hierbei werden aus mindestens zwei einzelnen Batteriezellen 21, die seriell oder parallel miteinander verschaltet werden, Batteriemodule (in Figur 1 nicht gezeigt) gebildet.

Die Batterie 20 ist aus zwei Batteriezellschaltungen 22, 23 ausgebildet, die jeweils mehrere in Reihe geschaltete Batteriezellen 21 umfassen. Diese Batteriezellenschaltungen 22, 23 oder Zellmodule sind jeweils mit einem Batterieterminal 24, 25 und mit einem Anschluss eines Servicesteckers 30 verbunden.

Das positive Batterieterminal 24 ist mit der Batterie 20 über eine Trenn- und Ladeeinrichtung 40 verbindbar, die einen Trennschalter 41 umfasst, der parallel zu einer Reihenschaltung aus einem Ladeschalter 42 und einem Ladewiderstand 43 geschaltet ist. Das negative Batterieterminal 25 ist mit der Batterie 20 über eine Trenneinrichtung 50 verbindbar, die einen weiteren Trennschalter 51 umfasst.

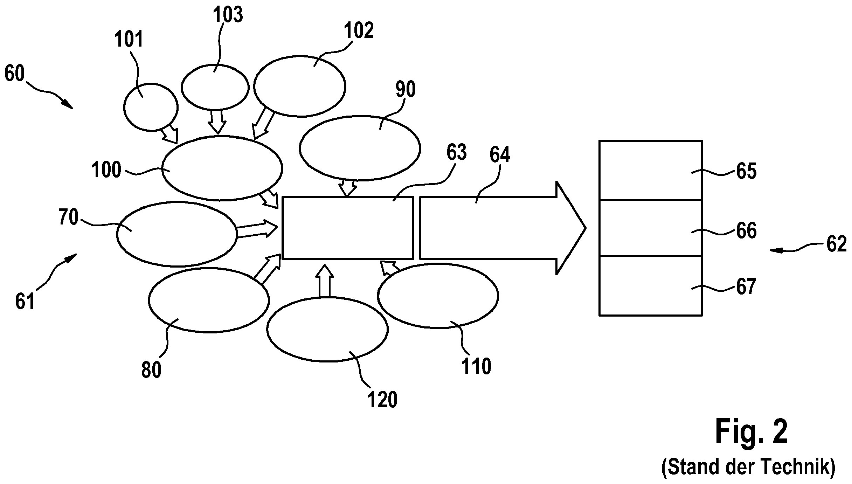

Ferner zeigt Figur 2 ein Diagramm 60, in dem verschiedene Fehlermechanismen 61 von Lithium-Ionen-Batterien und deren Konsequenzen 62 stark schematisiert darstellt werden. Diese dargestellten Fehlermechanismen 61 können zu einem durch eine unzulässige Temperaturerhöhung 63 hervorgerufenen thermischen Durchgehen (Thermal Runaway) 64 der Batteriezellen 21 führen. Bei Auftreten eines thermischen Durchgehens 64 kann es aufgrund einer Emission von Gas 65, die beispielsweise beim Öffnen eines Berstventils als Folge eines erhöhten Batteriezellinnendruckes auftreten kann, zu einem Brand der Batteriezellen 66 oder im Extremfall sogar zu einem Bersten 67 der Batteriezellen 21 kommen. Daher muss das Auftreten eines thermischen Durchgehens 64 bei dem Einsatz der Batteriezellen 21 in Traktionsbatterien mit höchster Wahrscheinlichkeit nahe 1 ausgeschlossen werden.

Ein thermisches Durchgehen 64 kann bei einem Überladen 70 einer Batteriezelle 21, als Folge einer Tiefentladung 80 einer Batteriezelle 21 während des anschließenden Ladevorganges oder bei Vorliegen von unzulässig hohen Lade- und Entladeströmen der Batteriezelle 21, die beispielsweise einem externen Kurzschlusses 90 entstehen können, auftreten. Ferner kann ein thermisches Durchgehen 64 auch bei Vorliegen eines batteriezellinternen Kurzschlusses 100 auftreten, der beispielsweise als Folge einer starken mechanischen Krafteinwirkung während eines Unfalls 101 oder als Folge der Bildung von batteriezellinternen Dendriten 102 entstehen kann, die beispielsweise bei Vorliegen von zu hohen Ladeströmen bei tiefen Temperaturen entstehen können. Weiterhin kann ein thermisches Durchgehen 64 auch als Folge von batteriezellinternen Kurzschlüssen auftreten, die durch bei der Fertigung entstehende Verunreinigungen der Batteriezellen 21, insbesondere durch in den Batteriezellen vorhandenen metallischen Fremdpartikeln 103, verursacht werden können. Auch kann ein thermisches Durchgehen 64 bei Vorliegen einer unzulässigen Erwärmung der Batteriezellen 110, die beispielsweise als Folge eines Fahrzeugbrandes entstehen kann, oder bei Vorliegen einer Überlastung der Batteriezellen 120 auftreten.

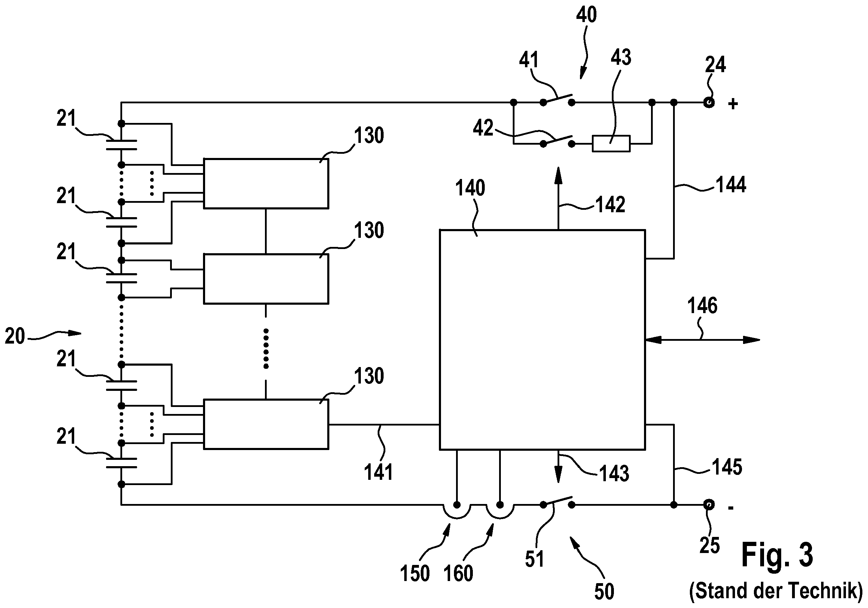

In der Figur 3 ist das Prinzipschaltbild eines aus dem Stand der Technik bekannten Batteriesystems dargestellt, das eine Traktionsbatterie 20 mit mehreren Batteriezellen 21 und ein Batteriemanagementsystem (BMS) umfasst. Die Elektronik des Batteriemanagementsystems weist eine dezentrale Architektur auf, bei der die aus der Zellüberwachungselektronik (CSC Elektronik) der Batteriezellen 21 ausgebildeten Überwachungs- und Ansteuerungseinheiten 130 als Satelliten ausgeführt sind, die jeweils zum Überwachen des Funktionszustandes einer oder mehrerer Batteriezellen 21 vorgesehen sind und über ein internes Bussystem 141 mit einem zentralen Batteriesteuergerät (BCU) 140 kommunizieren.

Die Elektronik des Batteriemanagementsystems, insbesondere die Überwachungselektronik der Batteriezellen 21, ist erforderlich, um die Batteriezellen 21 vor den kritischen, in Figur 2 dargestellten Zuständen zu schützen, die zu einem thermischen Durchgehen führen können. In der Elektronik des Batteriemanagementsystems wird ein hoher Aufwand betrieben, um zum einen die Batteriezellen 21 vor einer Überlastung durch externe Ursachen, wie beispielsweise durch einen Kurzschluss in dem Inverter eines Elektroantriebes, zu schützen, und zum anderen, um zu vermeiden, dass die Batteriezellen 21 durch eine Fehlfunktion der Elektronik des Batteriemanagementsystems, wie beispielsweise durch eine fehlerhafte Erfassung der Batteriezellspannungen durch die Überwachungs- und Ansteuerungseinheiten 130, gefährdet werden.

So wie bei dem in der Figur 1 dargestellten Batteriesystem ist bei dem in der Figur 3 dargestellten Batteriesystem die Traktionsbatterie über eine Trenn- und Ladeeinrichtung 40 mit einem positiven Batterieterminal 24 verbindbar und über eine Trenneinrichtung 50 mit einem negativen Batterieterminal 25 verbindbar. Dabei wurden zur Bezeichnung gleicher oder ähnlicher Komponenten für die in den Figuren 1 und 3 dargestellten Batteriesysteme jeweils die gleichen Bezugszeichen verwendet.

Ferner ist das zentrale Batteriesteuergerät 140 dazu ausgebildet, den Trennschalter (Relais) 41 und den Ladeschalter (Relais) 42 der Trenn- und Ladeeinrichtung 40 anzusteuern. Das Ansteuern des Trennschalters 41 und des Ladeschalters 42 mittels des Batteriesteuergeräts 140 wird in der Zeichnung mit dem Pfeil 142 symbolisiert. Auch ist das zentrale Batteriesteuergerät 140 dazu ausgebildet, den weiteren Trennschalter (Relais) 51 der Trenneinrichtung 50 anzusteuern. Das Ansteuern des Trennschalters 51 mittels des Batteriesteuergeräts 140 ist mit dem Pfeil 143 symbolisiert.

Das zentrale Batteriesteuergerät 140 ist über eine Hochvoltleitung 144, 145 mit einem jeweils anderen Batterieterminal 24, 25 verbunden. Ferner umfasst das zentrale Batteriesteuergerät 140 Stromsensoren 150, 160, die dazu vorgesehen sind, einen durch die Traktionsbatterie 20 fließenden Strom zu messen. Das Batteriesteuergerät 140 kommuniziert auch mit einer Fahrzeugschnittstelle (vehicle interface) über einen CAN-Bus 146. Über den CAN-Bus können dem Batteriesteuergerät 140 Informationen über den Funktionszustand des Fahrzeuges bereitgestellt werden.

Bei der Verwendung eines Batteriemanagementsystems eines aus dem Stand der Technik bekannten Batteriesystems wird somit angestrebt, die Sicherheit des Batteriesystems so zu erhöhen, dass keine unzumutbare Gefährdung auftritt. Dabei werden gemäß der ISO 26262 hohe Anforderungen an die funktionale Sicherheit des Batteriemanagementsystems gestellt, da eine Fehlfunktion der Elektronik, wie oben bereits erläutert, zu einer Gefährdung führen kann. Ferner sind für Lithium-ionen-Batteriezellen Sicherheitstests vorgeschrieben. Um die Batteriezellen transportieren zu dürfen, müssen beispielsweise UN Transport-Tests durchgeführt werden. Die Testergebnisse müssen gemäß den EUCAR Gefahrenstufen beziehungsweise Gefahrenlevels (EUCAR Hazard Levels) bewertet werden. Die Batteriezellen 21 müssen dabei vorgegebene Mindestsicherheitslevels einhalten. Um dies zu erreichen, werden in den Batteriezellen, die für den Einsatz in Traktionsbatterien vorgesehen sind, umfangreiche Zusatzmaßnahmen getroffen.

Für Batteriemanagementsysteme für Batteriesysteme mit Traktionsbatterien 20 für Elektrofahrzeuge und Steckdosenhybride (Plug-in-Hybride) wird sich voraussichtlich eine Einstufung gemäß der Gefahrenstufe ASIL C etablieren, falls die Sicherheit der Batteriezellen 21 nicht signifikant erhöht werden kann. Solche Zusatzmaßnahmen werden dadurch getroffen, dass sogenannte Sicherheitsvorrichtungen (Safety Devices) in den Batteriezellen integriert werden. Dabei werden in den Batteriezellen typischerweise die im Folgenden angegebenen Sicherheitsvorrichtungen integriert.

In einer Batteriezelle wird eine Überladesicherheitsvorrichtung (Overcharge Safety Device) (OSD) integriert. Eine solche Überladesicherheitsvorrichtung bewirkt, dass die Batteriezelle bei einem Überladevorgang eine EUCAR Gefahrenstufe 4 nicht überschreitet. Der zulässige Bereich der Batteriezellspannung endet bei 4,2 V. Bei einem Überladevorgang baut die Batteriezelle ab einer Batteriezellspannung von etwa 5 V einen derart hohen Innendruck auf, das eine Membran der Überladesicherheitsvorrichtung nach außen gewölbt wird und die Batteriezelle elektrisch kurzgeschlossen wird. Als Folge davon wird die Batteriezelle solange entladen, bis eine batteriezellinterne Sicherung aktiviert wird. Der Kurzschluss der Batteriezelle zwischen den beiden Polen der Batteriezelle bleibt über die Überladesicherheitsvorrichtung erhalten.

Ferner wird eine Batteriezellsicherung (Cell Fuse) in die Batteriezelle integriert. Diese in der Batteriezelle integrierte Schmelzsicherung ist ein sehr wirksames Schutzinstrument auf Batteriezellebene, verursacht aber erhebliche Probleme beim Verbau der Batteriezellen in einer Serienschaltung eines Batteriemoduls beziehungsweise in einem Batteriesystem. Dort sind diese Maßnahmen eher kontraproduktiv.

In einer Batteriezelle wird auch eine Nageleindringsicherheitsvorrichtung (Nail Penetration Safety Device (NDS)) integriert. Eine Nageleindringsicherheitsvorrichtung schützt die Batteriezelle, indem beim Eindringen eines Nagels oder eines spitzen Gegenstandes in die Batteriezelle ein derart definierter Kurzschlusspfad aufgebaut wird, der nicht zu einer so starken lokalen Erwärmung der Batteriezelle im Bereich des Nageleintrittes führt, welche zu einem lokalen Schmelzen des vorhandenen Separators führen könnte.

In eine Batteriezelle wird auch eine Funktionssicherheitsschicht (Safety Function Layer (SFL)) integriert. Die Funktionssicherheitsschicht wird durch die keramische Beschichtung einer der beiden Elektroden der Batteriezelle, realisiert, vorzugsweise durch die keramische Beschichtung der Anode. Mittels der Funktionssicherheitsschicht kann bei einem Schmelzen des Separators ein flächiger Kurzschluss der Batteriezelle und damit eine extrem schnelle Umsetzung der elektrischen Energie der Batteriezelle in Verlustwärme verhindert werden.

In eine Batteriezelle wird ferner auch eine Stoßsicherheitsvorrichtung (Crush Safety Device) integriert. Die Stoßsicherheitsvorrichtung weist eine ähnliche Funktionsweise wie die Nageleindringsicherheitsvorrichtung auf. Bei einer starken mechanischen Deformation des Batteriezellgehäuse wird ein definierter Kurzschlusspfad in der Batteriezelle bereitgestellt, der eine starke lokale Erwärmung der Batteriezelle verhindert und dadurch die Sicherheit der Batteriezelle erhöht.

Bei den aktuell in Entwicklung befindlichen Batteriezellen sind insbesondere die Maßnahmen für die elektrische Sicherheit, die beispielsweise vor einem Überladen schützen oder einen Überstromschutz gewährleisten, mit erheblichem Aufwand verbunden. Diese Maßnahmen sind zudem nach dem Verbau einer Batteriezelle in ein Batteriemodul beziehungsweise in ein Batteriesystem tendenziell sogar eher kontraproduktiv anstatt sinnvoll. Beispielsweise kann bei einer Aktivierung der Schmelzsicherung einer Batteriezelle die Situation entstehen, dass die Elektronik des vorhandenen Batteriemanagementsystems (BMS) sehr hohen negativen Spannungen ausgesetzt wird. Dadurch entsteht auf Batteriesystemebene ein zusätzlicher Aufwand, da die Transportvorschriften auf Batteriezellenebene erfüllt werden müssen, ohne dass damit ein sonstiger Nutzen verbunden wäre.

Die US 2011/198936 A1 zeigt eine Schaltvorrichtung mit einem Multilevelkonverter für eine Batterie.

Die WO 2010/044883 A2 zeigt eine Batterie für einen Rauchmelder mit automatischer Batterieentladung am Ende der Lebensdauer der Batterie.

### Offenbarung der Erfindung

Erfindungsgemäß wird ein Batteriemodul gemäß Anspruch 1 bereitgestellt.

Erfindungsgemäß wird auch ein Verfahren zum Überwachen eines Batteriemoduls gemäß Anspruch 5 bereitgestellt. Erfindungsgemäß wird weiterhin ein Batteriesystem gemäß Anspruch 9 bereitgestellt.

Die Unteransprüche zeigen bevorzugte Weiterbildungen der Erfindung. Anschaulich gesagt wird erfindungsgemäß ein Batteriemodul bereitgestellt, das eine integrierte Überwachungs- und Ansteuerungsfunktion umfasst und eine umpolbare Ausgangsspannung bereitstellt. Insbesondere aufgrund der in dem Batteriemodul angeordneten Koppeleinheit mit vier Leistungshalbleitern wird ermöglicht, durch gezieltes Ansteuern der Leistungshalbleiter eine Reihe von einstellbaren Sicherungsfunktionen zur Sicherung des Batteriemoduls bereitzustellen. Die Sicherungsfunktionen können aufgrund der Überwachung des Batteriemoduls durch die Überwachungs- und Ansteuerungseinheit gezielt eingesetzt werden. Im Normalbetrieb kann das Batteriemodul bezüglich einer an den Ausgangsterminals des Batteriemoduls bereitgestellten Ausgangsspannung umgepolt werden, so dass das erfindungsgemäße Batteriemodul eine Batteriemodulspannung in positiver oder negativer Orientierung abgeben kann. Aufgrund der Funktionalität des erfindungsgemäßen Batteriemoduls, die Batteriemodulspannung umzupolen, eignet sich das erfindungsgemäße Batteriemodul insbesondere für den Einsatz in dreiphasigen Batteriesystemen mit stufig einstellbaren Ausgangsspannungen, die als Batteriedirektinverter bezeichnet werden, beziehungsweise allgemein in mehrphasigen Batteriesystemen mit stufig einstellbaren Ausgangsspannungen.

Es wird bevorzugt, dass die erfindungsgemäße Überwachungs- und Ansteuerungseinheit ferner dazu ausgebildet ist, zur Einstellung eines Normalbetriebs des Batteriemoduls, bei dem an den Ausgangsterminals des Batteriemoduls keine Spannung anliegt, die Leistungshalbleiter der Koppeleinheit derartig anzusteuern, dass entweder die ersten oder die zweiten Leistungshalbleiter der Halbbrücken eingeschaltet sind. Mit anderen Worten, das erfindungsgemäße Batteriemodul kann optional auch eine Spannung von 0 V an seinen Ausgangsterminals abgeben. Bevorzugt werden dabei die anderen beiden Leistungshalbleiter, das heißt beispielsweise bei eingeschalteten ersten Leistungshalbleitern beide zweite Leistungshalbleiter ausgeschaltet, und umgekehrt.

Bei einer bevorzugten Ausführungsform der Erfindung ist die erfindungsgemäße Überwachungs- und Ansteuerungseinheit dazu ausgebildet, bei Vorliegen einer Batteriezellspannung oder Batteriemodulspannung, deren Betrag einen oberen Spannungsgrenzwert überschreitet, und/oder bei Vorliegen einer Batteriezellspannung oder Batteriemodulspannung, deren Betrag einen unteren Spannungsgrenzwert unterschreitet, die Leistungshalbleiter der Koppeleinheit zur Einstellung eines Funktionszustand des Batteriemoduls, in dem durch das Batteriemodul kein Strom fließen kann, derartig anzusteuern, dass die ersten oder die zweiten Leistungshalbleiter der Halbbrücken eingeschaltet und die zweiten oder die ersten Leistungshalbleiter der Halbbrücken ausgeschaltet sind.

Dies hat den Vorteil, dass die Überwachungs- und Ansteuerungseinheit eine drohende Überladung des im Normalbetrieb arbeitenden Batteriemoduls anhand einer Überschreitung eines oberen Grenzwertes einer Batteriezellspannung oder der Batteriemodulspannung erkennt, und das Batteriemodul dann günstigerweise nicht weiter aufgeladen und damit beispielsweise bei einer Fehlfunktion eines Batterieladegerätes sicher vor einer Überladung geschützt werden kann.

Ferner erkennt die Überwachungs- und Ansteuerungseinheit eine drohende Tiefentladung ausgehend von dem im Normalbetrieb arbeitenden Batteriemodul anhand einer Unterschreitung eines unteren Grenzwertes der Batteriezellspannung oder Batteriemodulspannung, wobei das Batteriemodul in einen sicheren Zustand überführt wird, bei dem kein Strom durch das Batteriemodul mehr fließt. Ein eventuell über ein gesamtes, das erfindungsgemäße Batteriemodul umfassende Batteriesystem nach außen abgebbarer Strom fließt in dem erfindungsgemäßen Batteriemodul nur über die vorhandenen Leistungshalbleiter beziehungsweise Halbleiterschalter.

Bei einer weiteren bevorzugten Ausführungsform der Erfindung ist die erfindungsgemäße Überwachungs- und Ansteuerungseinheit dazu vorgesehen, bei Vorliegen eines Ladestroms, dessen Betrag einen vorgegebenen beziehungsweise geeignet gewählten Ladestromgrenzwert überschreitet und/oder bei Vorliegen eines Entladestroms, dessen Betrag einen vorgegebenen beziehungsweise geeignet gewählten Ladestromgrenzwert überschreitet, die Leistungshalbleiter der Koppeleinheit zur Einstellung eines Funktionszustand des Batteriemoduls, in dem durch das Batteriemodul kein Strom mehr fließen kann, derartig anzusteuern, dass die ersten oder die zweiten Leistungshalbleiter der Halbbrücken eingeschaltet und die zweiten oder die ersten Leistungshalbleiter der Halbbrücken ausgeschaltet sind.

Somit erkennt die Überwachungs- und Ansteuerungseinheit ausgehend von dem im Normalbetrieb arbeitenden Batteriemodul eine drohende Überlastung durch zu hohe Entladeströme, die beispielsweise als Folge eines externen Kurzschlusses der Batterie durch einen Fehler im Inverter auftreten können. Dabei wird das Batteriemodul in einen sicheren Zustand überführt, in dem kein Strom durch das Batteriemodul fließt. Das Batteriemodul wird so vor einer Belastung mit unzulässig hohen Entladeströmen geschützt.

Ferner erkennt die Überwachungs- und Ansteuerungseinheit ausgehend von dem im Normalbetrieb arbeitenden Batteriemodul eine drohende Überlastung des Batteriemoduls durch zu hohe Ladeströme, wobei das Batteriemodul dann in den sicheren Zustand überführt wird, in dem kein Strom mehr durch das Batteriemodul fließt. Das Batteriemodul wird so vor einer Belastung mit unzulässig hohen Ladeströmen geschützt. Dies ist besonders vorteilhaft beispielsweise bei Vorliegen von sehr tiefen Temperaturen, bei denen die Batteriezellen besonders empfindlich hinsichtlich eines sich auf der Anode ausbildbareren Lithiumüberzugs ("Lithium plating") sind.

Die erfindungsgemäße Überwachungs- und Ansteuerungseinheit ist dazu ausgebildet, anhand einer Auswertung von insbesondere durch ein Batteriemanagementsystem kommunizierter Information das Vorliegen einer Gefahrsituation, in der das Batteriemodul beschädigt werden kann, zu erkennen. Dabei ist die erfindungsgemäße Überwachungs- und Ansteuerungseinheit dazu ausgebildet, bei Vorliegen der Gefahrsituation mindestens eine der beiden Halbbrücken der Koppeleinheit derartig anzusteuern, dass der erste oder der zweite Leistungshalbleiter einer Halbbrücke eingeschaltet ist und der zweite oder der erste Leistungshalbleiter derselben Halbbrücke im sogenannten aktiven Betrieb als steuerbarer Widerstand arbeitet, so dass das Batteriemodul entladen wird. Dazu können der erste und/oder der zweite Leistungshalbleiter der anderen Halbbrücke ausgeschaltet sein. Ferner können zum Entladen des Batteriemoduls jeweils beide ersten oder die zweiten Leistungshalbleiter der Halbbrücken eingeschaltet sein, wohingegen entsprechend die zweiten beziehungsweise die ersten Leistungshalbleiter der beiden Halbbrücken im aktiven Betrieb arbeiten.

Mit anderen Worten, es kann in einem Fall, in dem der Elektronik der Überwachungs- und Ansteuerungseinheit des erfindungsgemäßen eigensicheren Batteriemoduls durch ein Batteriemanagementsystem beispielsweise eine entsprechende Information darüber mitgeteilt wird, das das Fahrzeug, in dem das erfindungsgemäße Batteriesystem eingebaut ist, einen Unfall hatte, das Batteriemodul über eine der beiden Halbbrücken oder auch parallel über beide Halbbrücken entladen werden. Während der Entladung des Batteriemoduls über eine der zwei Halbbrücken gibt das Batteriemodul über seine Ausgangsterminals keine Spannung ab, wird jedoch trotzdem langsam entladen. Ein insbesondere als steuerbarer Widerstand betriebener Leistungshalbleiter wird hierbei inklusive seiner thermischen Anbindung und Kühlung entsprechend den Anforderungen ausgelegt.

Bei einer anderen besonders vorteilhaften Ausführungsform der Erfindung ist die Überwachungs- und Ansteuerungseinheit dazu eingerichtet, anhand einer Auswertung einer gemessenen Zelltemperatur oder Batteriemodultemperatur, insbesondere bei einer einen vorbestimmten Temperaturgrenzwert überschreitenden Zelltemperatur beziehungsweise Batteriemodultemperatur, und/oder Anhand einer Auswertung der Batteriezellspannung oder Batteriemodulspannung, insbesondere bei einem Spannungseinbruch der Batteriezellspannung beziehungsweise Batteriemodulspannung, das Vorliegen einer Gefahrsituation zu erkennen.

Bei einer weiteren besonders bevorzugten Ausführungsform der Erfindung ist das Batteriemodul ferner mit einer mit den Batteriezellen gekoppelten Entladeschaltung, insbesondere einer Entladeschaltung mit einer Serienschaltung aus einem Leistungshalbleiter und einem Widerstand, ausgestattet. Dabei kann das Batteriemodul dazu eingerichtet sein, bei Vorliegen einer Gefahrsituation die Entladeschaltung derartig anzusteuern, dass ein Entladen des Batteriemoduls mittels der Entladeschaltung, insbesondere ein Entladen des Batteriemoduls mit einem durch die Entladeschaltung fließenden Entladestrom, der einem vorbestimmten Bruchteil eines Kurzschlussstroms des Batteriemoduls entspricht, erfolgen kann. Ein Vorteil davon ist, dass die realisierbaren Entladeströme dabei nicht aufgrund thermischer Verlustleistung, die sich bei einem als steuerbarer Widerstand betriebenen Leistungshalbleiter ergibt beziehungsweise die Leistungshalbleitern im Dauerbetrieb auferlegt werden kann, begrenzt sind.

Somit kann, wenn der Elektronik der Überwachungs- und Ansteuerungseinheit des erfindungsgemäßen eigensicheren Batteriemodul von einem Batteriemanagementsystem mitgeteilt wird, das das mit dem erfindungsgemäßen Batteriesystem ausgestattete Fahrzeug einen Unfall hatte, die Batteriezelle über die Entladeschaltung, die im Folgenden auch als ultraschnelle Entladevorrichtung (Ultra Fast Discharge Device) (UFDD) bezeichnet wird, schnellstmöglich entladen werden. Um die Entladeschaltung zu unterstützen, kann die Batteriezelle zusätzlich auch über eine oder beide der Halbbrücken entladen werden.

Gemäß einem Aspekt können aufgrund der erfindungsgemäßen Erkennung einer Gefahrsituation vorteilhaft auch eine Durchführung eines Testvorganges, während dessen das Batteriemodul getestet wird, oder andere, aus Sicht des Batteriemoduls vergleichbare Situationen, zuverlässig erkannt werden.

Wird das erfindungsgemäße Batteriemodul beispielsweise im Rahmen eines UN Transport-Tests einem Nageleindringtest (Nail Penetration Test) oder einem Stoßtest (Crush Test) unterzogen, erkennt die Elektronik der erfindungsgemäßen Überwachungs- und Ansteuerungseinheit über die Auswertung einer Batteriezellspannung oder Batteriemodulspannung, dass das Batteriemodul über Ströme entladen wird, ohne dass es betrieben wird. Die Erkennung dieses Vorganges kann beispielsweise über einen Spannungseinbruch der Batteriezellspannung oder Batteriemodulspannung erfolgen. Als Folge davon wird sofort das Entladen des Batteriemoduls über die erfindungsgemäße Entladeschaltung ausgelöst, und das Batteriemodul wird dann im Wesentlichen über die Entladeschaltung entladen. Optional kann auch hier, wie bereits erläutert, eine Unterstützung der Entladung des Batteriemoduls über die beiden Halbbrücken erfolgen.

Wird das Batteriemodul einer starken Erwärmung ausgesetzt, so kann dies über die Elektronik der erfindungsgemäßen Überwachungs- und Ansteuerungseinheit erkannt werden. Als Folge davon wird sofort das Entladen des Batteriemoduls beispielsweise über die erfindungsgemäße Entladeschaltung ausgelöst, und das Batteriemodul wird über die Entladeschaltung rechtzeitig entladen.

Zusammenfassend kann das erfindungsgemäße elektrisch eigensichere Batteriemodul in Verbindung mit der in dem Batteriemodul vorgesehenen Koppeleinheit und der Überwachungs- und Ansteuerungseinheit so sicher ausgeführt sein, dass im Vergleich zu einem aus dem heutigen Stand der Technik bekanntem Batteriesystem bei dem erfindungsgemäßen Batteriesystem nunmehr wesentlich geringere Anforderungen an das Batteriemanagementsystem gestellt werden müssen. Darüber hinaus können zahlreihe, bisher typischerweise durchgeführten, jedoch nicht zielführende Maßnahmen, wie beispielsweise das Ausstatten einer Batteriezelle oder eines Batteriemoduls mit einer integrierter Überladesicherheitsvorrichtung und/oder einer integrierten Batteriezellsicherung, entfallen.

Ferner können auch herkömmliche Maßnahmen, die für die Erhöhung der Sicherheit bei Vorliegen von starken mechanischen Krafteinwirkungen, wie das Ausstatten eines Batteriemoduls mit einer integrierter Nageleindringsicherheitsvorrichtung und/oder mit einer integrierten Stoßsicherheitsvorrichtung, entfallen beziehungsweise zumindest wesentlich einfacher realisiert werden, da die Anforderungen seitens des erfindungsgemäßen Batteriemoduls geringer sind. Es wird ermöglicht, dass auf das Batteriemodul starke mechanische Krafteinwirkungen, wie sie beispielsweise bei UN Transport-Tests simuliert werden, gefahrlos einwirken können. Dies betrifft insbesondere auch eine Penetration des Batteriemoduls mit spitzen Gegenständen und/oder eine starke Deformation des Batteriemoduls oder einzelner Batteriezellen durch Stöße in allen drei Raumachsen. Das erfindungsgemäße Batteriemodul kann sich mittels der Überwachungs- und Ansteuerungsvorrichtung selbstständig vor unzulässigen Betriebszuständen schützen, ohne dabei beispielsweise auf Sicherungsfunktionen der Elektronik eines Batteriemanagementsystems angewiesen zu sein.

Mit dem erfindungsgemäßen elektrisch eigensicheren Batteriemodul steht somit ein Grundbaustein zur Verfügung, aus dem sichere Batteriesysteme, insbesondere in Elektro- und Hybridfahrzeugen, aufgebaut werden können, deren Sicherheit wesentlich höher ist als bei den aus dem Stand der Technik bekannten Batteriesystemen.

### Kurze Beschreibung der Zeichnungen

Nachfolgend werden Ausführungsbeispiele der Erfindung unter Bezugnahme auf die begleitende Zeichnung im Detail beschrieben. In den Zeichnungen ist:
- Figur 1: das Prinzipschaltbild eines aus dem Stand der Technik bekannten Batteriesystems mit einer Traktionsbatterie,
- Figur 2: ein Diagramm, dass die Fehlermechanismen einer aus dem Stand der Technik bekannten Lithium-Ionen-Batterie darstellt, die zu einem thermischen Durchgehen dieser Lithium-Ionen-Batterie führen können,
- Figur 3: das Prinzipschaltbild eines aus dem Stand der Technik bekannten Batteriesystems mit einer aus mehreren Batteriezellen ausgebildeten Traktionsbatterie und einem Batteriemanagementsystem,
- Figur 4: das Prinzipschaltbild eines Batteriemodul nach einer ersten Ausführungsform der Erfindung,
- Figur 5: das Prinzipschaltbild eines Batteriemoduls nach einer anderen Ausführungsform der Erfindung,
- Figur 6: das Prinzipschaltbild eines Batteriemoduls nach noch einer anderen Ausführungsform der Erfindung,
- Figur 7: das Prinzipschaltbild eines Batteriemoduls nach noch einer anderen Ausführungsform der Erfindung,
- Figur 8: das Prinzipschaltbild eines Batteriemoduls nach noch einer anderen Ausführungsform der Erfindung,
- Figur 9: das Prinzipschaltbild eines Batteriemoduls nach noch einer anderen Ausführungsform der Erfindung,
- Figur 10: das Prinzipschaltbild eines Batteriemoduls nach noch einer anderen Ausführungsform der Erfindung,
- Figur 11: das Prinzipschaltbild eines Batteriemoduls nach noch einer anderen Ausführungsform der Erfindung, das ein Ultra-Discharge-Device zur schnellen Entladung des Batteriemoduls umfasst, und
- Figur 12: das Prinzipschaltbild eines Batteriedirektinverters mit drei Batteriesträngen, in denen jeweils mehrere der erfindungsgemäßen Batteriemodule seriell geschaltet sind.

### Ausführungsformen der Erfindung

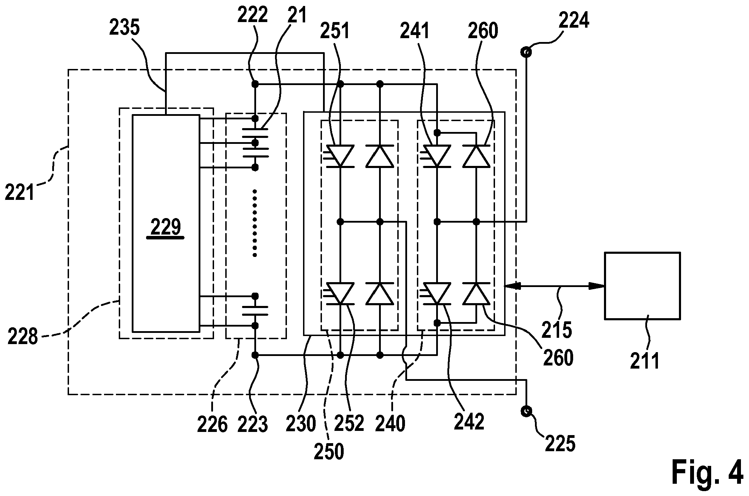

In der Figur 4 ist das Prinzipschaltbild eines Batteriemoduls 221 nach einer ersten Ausführungsform der Erfindung dargestellt. Das Batteriemodul 221 nach der ersten Ausführungsform der Erfindung umfasst mehrere in einer Batteriezellschaltung 226 angeordnete Batteriezellen 21. Die Batteriezellschaltung 226 ist hier eine Reihenschaltung, kann bei anderen Ausführungsformen der Erfindung aber auch eine Parallelschaltung oder eine Kombination aus einer Parallelschaltung und einer Reihenschaltung aufweisen. Die Batteriezellen sind mit einer Zellüberwachungselektronik (CSC) 228 verbunden, die zur Überwachung der einzelnen Batteriezellen 21 vorgesehen ist. Nach der hier gezeigten Ausführungsform ist die Zellüberwachungselektronik 228 durch eine zentrale Zellüberwachungselektronik implementiert, die mit allen Batteriezellen 21 verbunden ist und ferner insbesondere ein Zellbalancing steuern kann.

Das Batteriemodul 221 weist ferner eine Koppeleinheit auf, die aus einer ersten Halbbrücke (die rechte Halbbrücke aus der Figur 4) 240 mit einem ersten und einem zweiten Leistungshalbleiter 241, 242 und einer zweiten Halbbrücke (die linke Halbbrücke aus der Figur 4) 250 mit einem ersten und einem zweiten Leistungshalbleiter 251, 252 ausgebildet ist. Die beiden Halbbrücken 240, 250 bilden zusammen eine Vollbrücke mit vier Leistungshalbleitern 241, 242, 251, 252. Parallel zu den Leistungshalbleitern 241, 242, 251, 252 ist jeweils eine Diode 260 geschaltet, deren Durchlassrichtung entgegen der Durchlassrichtung des entsprechenden Leistungshalbleiters verläuft. Zur Vereinfachung der Darstellung wurde nur eine Diode pro Halbbrücke 240, 250 mit dem Bezugszeichen 160 versehen.

Die erste Halbbrücke 240 ist an einem ersten, dem ersten Leistungshalbleiter (der obere Leistungshalbleiterschalter der rechten Halbbrücke aus der Figur 4) 241 zugeordneten Anschluss mit den Batteriezellen beziehungsweise einem Pluspol 222 der Batteriezellschaltung 226 und an einem zweiten, dem zweiten Leistungshalbleiter 242 (der untere Leistungshalbleiterschalter der rechten Halbbrücke aus der Figur 4) zugeordneten Anschluss mit einem Minuspol 223 der Batteriezellschaltung 226 verbunden. Die erste Halbbrücke 240 ist ferner an einem Mittelanschluss mit einem ersten Ausgangsterminal 224 des Batteriemoduls 221 verbunden.

Die zweite Halbbrücke 250 ist an einem ersten, dem ersten Leistungshalbleiter (der obere Leistungshalbleiterschalter der linken Halbbrücke aus der Figur 4) 251 zugeordneten Anschluss mit dem Pluspol 222 der Batteriezellschaltung 226 und an einem zweiten, dem zweiten Leistungshalbleiter (der untere Leistungshalbleiterschalter der linken Halbbrücke aus der Figur 4) 252 zugeordneten Anschluss mit dem Minuspol 223 der Batteriezellschaltung 21 verbunden. Die zweite Halbbrücke 250 ist ferner an einem Mittelanschluss mit einem zweiten Ausgangsterminal 225 des Batteriemoduls 221 verbunden.

Das erfindungsgemäße Batteriemodul 221 umfasst ferner eine zu der Batteriezellschaltung 226 parallel geschaltete Überwachungs- und Ansteuerungseinheit 230 zum Überwachen des Funktionszustandes des Batteriemoduls 221. Die Überwachungs- und Ansteuerungseinheit 230 ist erfindungsgemäß mit einer integrierten Ansteuerung für die vier Leistungshalbleiter 241, 242, 251, 252 eingerichtet.

Die Leistungshalbleiter 241, 242, 251, 252 können mittels der erfindungsgemäßen Überwachungs- und Ansteuerungseinheit 230 derartig angesteuert werden, dass wenn im Normalbetrieb das Batteriemodul 221 die Batteriemodulspannung an die Ausgangsterminals 224, 225 in positiver Orientierung (+U_{Batteriemodul}) abgeben soll, der erste Leistungshalbleiter 241 der ersten Halbbrücke 240 sowie der zweite Leistungshalbleiter 252 der zweiten Halbbrücke 250 eingeschaltet und die anderen zwei Leistungshalbleiter 242, 251 ausgeschaltet sind.

Die Leistungshalbleiter 241, 242, 251, 252 können mittels der erfindungsgemäßen Überwachungs- und Ansteuerungseinheit 230 ferner derartig angesteuert werden, dass wenn im Normalbetrieb das Batteriemodul 221 die Batteriemodulspannung an die Ausgangsterminals 224, 225 in negativer Orientierung (-U_{Batteriemodul}) abgeben soll, der zweite Leistungshalbleiter 242 der ersten Halbbrücke 240 sowie der erste Leistungshalbleiter 251 der zweiten Halbbrücke 250 eingeschaltet und die anderen beiden Leistungshalbleiter 241, 252 ausgeschaltet sind.

Die Leistungshalbleiter 241, 242, 251, 252 können mittels der erfindungsgemäßen Überwachungs- und Ansteuerungseinheit 230 ferner derartig angesteuert werden, dass im Normalbetrieb des Batteriemoduls 221 optional auch ein Funktionszustand des Batteriemoduls 221 einstellbar ist, in dem das Batteriemodul 221 keine Ausgangsspannung abgibt. In diesem Zustand sind entweder die ersten Leistungshalbleiter 241, 251 der beiden Halbbrücken 240, 250 eingeschaltet und die anderen beiden Leistungshalbleiter 242, 252 ausgeschaltet oder die zweiten Leistungshalbleiter 242, 252 der beiden Halbbrücken 240, 250 eingeschaltet und die anderen beiden Leistungshalbleiter 241, 252 ausgeschaltet.

In der Figur 4 ist auch ein Batteriemanagementsystem 211 dargestellt, das mit dem Batteriemodul 221 verbunden und dazu ausgebildet, mit der Überwachungs- und Ansteuerungseinheit 230 Informationen auszutauschen. Die Kommunikation zwischen dem Batteriemanagementsystem 211 und der Überwachungs- und Ansteuerungseinheit 20 ist mittels des Doppelpfeiles 215 symbolisiert

Ferner kommuniziert die Überwachungs- und Ansteuerungseinheit 230 mit der zentralen Zellüberwachungselektronik 229. Die Kommunikation 235 kann beispielsweise über einen Bus erfolgen, insbesondere über einen drahtgebundenen Bus 235, beispielsweise ein CAN-Bus oder über FlexRay. Jedoch ist die Erfindung nicht auf einen drahtgebundenen Bus beschränkt. Wenn daher im Folgenden von einem (drahtgebundenen) Bus die Rede ist, kann die Kommunikation in vielen Fällen stattdessen auch über drahtlose Verbindungen, wie beispielsweise Bluetooth, erfolgen. Somit werden der Überwachungs- und Ansteuerungselektronik 230 von der Zellüberwachungselektronik 229 insbesondere Spannungs- und/oder Strommesswerte übermittelt, die von der Überwachungs- und Ansteuerungseinheit 230 für eine Sicherheitsüberwachung weiterverarbeitet werden, wie im Folgenden dargestellt wird.

Erkennt die Überwachungs- und Ansteuerungseinheit 230 ausgehend vom Normalbetrieb der Batteriezelle 21 eine drohende Überladung des Batteriemoduls 221 anhand einer Überschreitung eines oberen Grenzwertes einer Batteriezellspannung oder Batteriemodulspannung, werden mittels der Überwachungs- und Ansteuerungseinheit 230 entweder die ersten Leistungshalbleiter 241, 251 der beiden Halbbrücken 240, 250 eingeschaltet und die anderen beiden Leistungshalbleiter 242, 252 ausgeschaltet oder, alternativ, die zweiten Leistungshalbleiter 242, 252 der beiden Halbbrücken 240, 250 eingeschaltet und die anderen beiden Leistungshalbleiter 241, 242 ausgeschaltet. Das Batteriemodul 221 wird dann nicht mehr weiter aufgeladen und kann damit beispielsweise bei Vorliegen einer Fehlfunktion eines verwendeten Batterieladegerätes sicher vor einer Überladung geschützt werden.

Erkennt die Überwachungs- und Ansteuerungseinheit 230 ausgehend vom Normalbetrieb des Batteriemoduls 221 eine drohende Tiefentladung des Batteriemoduls 221 anhand einer Unterschreitung eines unteren Grenzwertes einer Batteriezellspannung oder Batteriemodulspannung, werden mittels der Überwachungs- und Ansteuerungseinheit 230 entweder die ersten Leistungshalbleiter 241, 251 der beiden Halbbrücken 240, 250 eingeschaltet und die anderen beiden Leistungshalbleiter 242, 252 ausgeschaltet oder alternativ die zweiten Leistungshalbleiter 242, 252 der beiden Halbbrücken 240, 250 eingeschaltet und die anderen beiden Leistungshalbleiter 241, 242 ausgeschaltet. Es fließt dann kein Strom mehr durch das Batteriemodul 221. Ein eventuell über ein gesamtes Batteriesystem, in dem die erfindungsgemäße Batteriemodul 221 angeordnet ist, nach außen abgegebener Strom fließt in dem Batteriemodul 221 nur über die Leistungshalbleiter (Halbleiterschalter) 241, 242, 251, 252 der Koppeleinheit des Batteriemoduls 221.

Erkennt die Überwachungs- und Ansteuerungseinheit 230 ausgehend vom Normalbetrieb des Batteriemoduls 221 eine drohende Überlastung des Batteriemoduls 221 durch zu hohe Entladeströme, die beispielsweise als Folge eines externen Kurzschlusses der Batterie durch einen Fehler im Inverter auftreten können, werden mittels der Überwachungs- und Ansteuerungseinheit 230 entweder die ersten Leistungshalbleiter 241, 251 der beiden Halbbrücken 240, 250 eingeschaltet und die anderen beiden Leistungshalbleiter 242, 252 ausgeschaltet oder alternativ die zweiten Leistungshalbleiter 242, 252 der beiden Halbbrücken 240, 250 eingeschaltet und die anderen beiden Leistungshalbleiter 241, 242 ausgeschaltet. Es fließt dann kein Strom mehr durch das Batteriemodul 221. Das Batteriemodul 221 wird so vor einer Belastung mit unzulässig hohen Entladeströmen geschützt.

Erkennt die Überwachungs- und Ansteuerungseinheit 230 ausgehend vom Normalbetrieb des Batteriemoduls 221 eine drohende Überlastung des Batteriemoduls 221 durch zu hohe Ladeströme beispielsweise bei sehr tiefen Temperaturen, bei denen die Batteriezellen 21 besonders empfindlich hinsichtlich einem sich insbesondere auf der Anode ausbildbareren Lithiumüberzugs (Lithium-Plating) ist, werden mittels der Überwachungs- und Ansteuerungseinheit 230 entweder die ersten Leistungshalbleiter 241, 251 der beiden Halbbrücken 240, 250 eingeschaltet und die anderen beiden Leistungshalbleiter 242, 252 ausgeschaltet oder alternativ die zweiten Leistungshalbleiter 242, 252 der beiden Halbbrücken 240, 250 eingeschaltet und die anderen beiden Leistungshalbleiter 241, 242 ausgeschaltet. Es fließt dann kein Strom mehr durch das Batteriemodul 221, und das Batteriemodul 221 wird so vor einer Belastung mit unzulässig hohen Ladeströmen geschützt.

Wird der Überwachungs- und Ansteuerungseinheit 230 des erfindungsgemäßen eigensicheren Batteriemoduls 221 beispielsweise in einem Fahrzeug von einem Batteriemanagementsystem 211 mitgeteilt, dass das Fahrzeug einen Unfall hatte, werden das Batteriemodul 221 beziehungsweise dessen Batteriezellen 21 über eine der beiden Halbbrücken 240, 250 oder auch über beide Halbbrücken 240, 250 parallel entladen. Beispielsweise werden dazu mittels der Überwachungs- und Ansteuerungseinheit 230 der zweite Leistungshalbleiter 242, 252 einer der beiden Halbbrücken 240, 250 oder die zweiten Leistungshalbleiter 242, 252 auch beider Halbbrücken 240, 250 eingeschaltet und der erste Leistungshalbleiter 241, 251 einer der beiden Halbbrücken 240, 250 oder die ersten Leistungshalbleiter 241, 251 der beiden Halbbrücken 240, 250 im sogenannten aktiven Betrieb als steuerbarer Widerstand betrieben. Die Entladung der Batteriezellen 21 beziehungsweise des Batteriemoduls 221 kann in der gleichen Weise auch mit Vertauschung der Rollen der ersten Leistungshalbleiterschalter 241, 251 und der zweiten Leistungshalleiterschalter 241, 251 der beiden Halbbrücken 240, 250 erfolgen. Das Batteriemodul 221 gibt an seinen Ausgangsterminals 224, 225 keine Spannung ab und wird trotzdem langsam entladen. Die realisierbaren Entladeströme sind hier lediglich begrenzt durch die thermische Verlustleistung, die den als steuerbarer Widerstände betriebenen Leistungshalbleitern 241, 251, 242, 252 im Dauerbetrieb auferlegt werden kann. Ein als steuerbarer Widerstand betriebener Leistungshalbleiter 241, 251, 242, 252 inklusive seiner thermische Anbindung und Kühlung wird daher entsprechend den Anforderungen ausgelegt.

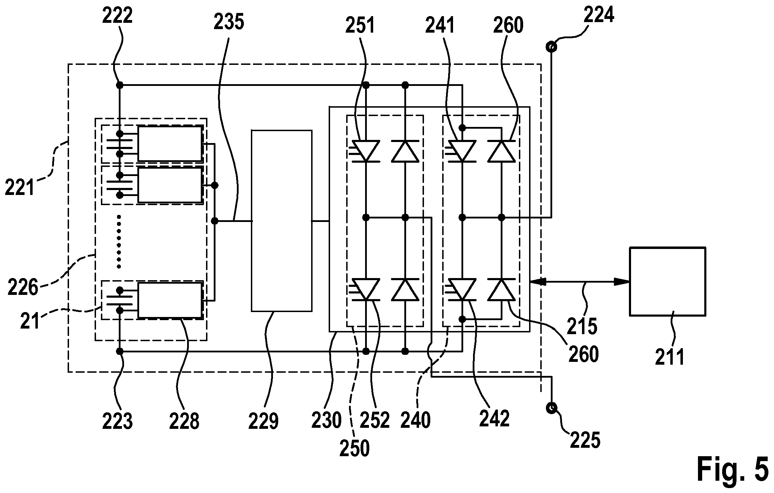

In der Figur 5 wird das Prinzipschaltbild eines Batteriemoduls nach einer anderen Ausführungsform der Erfindung gezeigt. Im Unterschied zu der in Figur 4 gezeigten Ausführungsform sind die Batteriezellen 21 hier jeweils mit einer eigenen Zellüberwachungselektronik 231 ausgestattet. Ferner ist, ähnlich wie in Figur 4, auch eine zentrale Zellüberwachungselektronik 229 vorhanden, wobei jedoch einige Funktionen der Zellüberwachung statt in der zentralen Zellüberwachungselektronik 229 nunmehr in den einzelnen Batteriezellen 21 beziehungsweise in den entsprechenden Batteriezell-eigenen Zellüberwachungselektroniken 231 ausgeführt werden. Dazu kommuniziert die zentrale Zellüberwachungselektronik 229 mit den einzelnen Zellüberwachungselektroniken 231 in den Batteriezellen. Diese Kommunikation kann mittels eines Busses 235 erfolgen, an den sowohl die zentrale Zellüberwachungselektronik 229 als auch die Batteriezell-eigenen Zellüberwachungselektroniken 231 angeschlossen sind. Die erfindungsgemäße Überwachungs- und Ansteuerungseinheit 230 hingegen kommuniziert, ähnlich wie nach Figur 4, mit der zentralen Zellüberwachungselektronik 229.

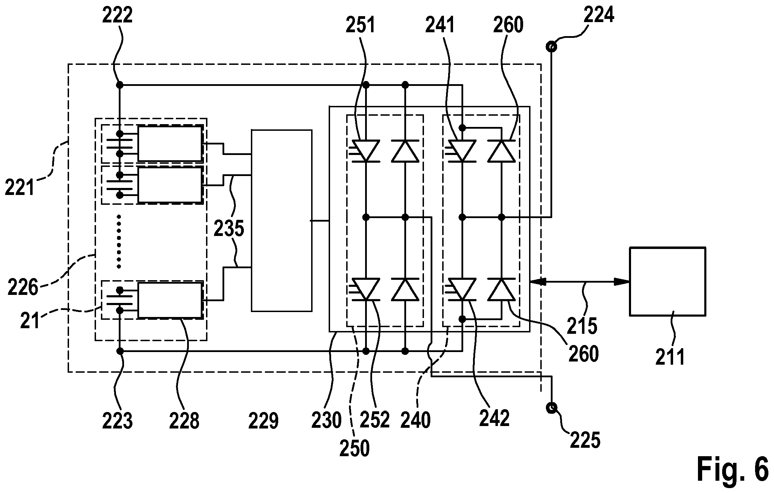

In der Figur 6 ist das Prinzipschaltbild eines Batteriemoduls nach noch einer anderen Ausführungsform der Erfindung gezeigt. Im Unterschied zu der Ausführungsform nach Figur 5 sind die Batteriezell-eigenen Zellüberwachungselektroniken 231 hier jeweils über einen eigenen, das heißt separaten Kommunikationsbus mit der zentralen Zellüberwachungselektronik 229 verbunden, die hierzu ausgangsseitig eine entsprechend höhere Zahl an Schnittstellen aufweist.

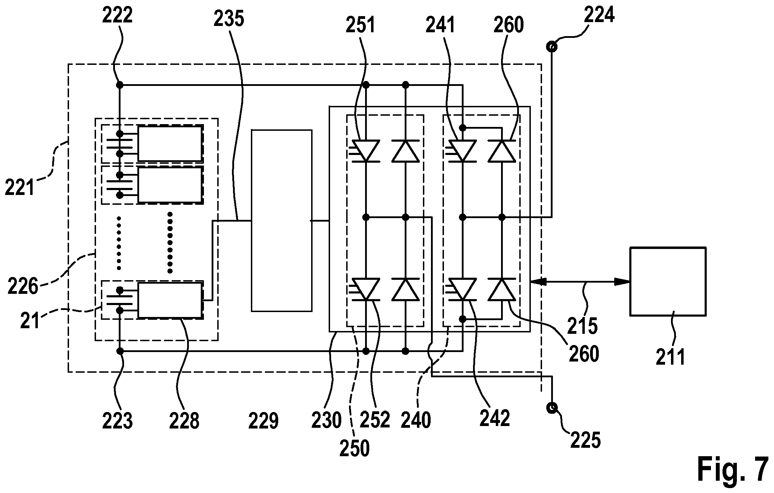

Die Figur 7 zeigt das Prinzipschaltbild eines Batteriemoduls nach noch einer anderen Ausführungsform der Erfindung, wobei gemäß dieser Ausführungsform eine Kommunikationsverbindung 235 zwischen einer Batteriezell-eigenen Zellüberwachungselektron 231 und der zentralen Zellüberwachungselektronik 229 vorhanden ist, so dass die zentrale Zellüberwachungselektronik 229 lediglich mit einer einzigen der Zellüberwachungselektroniken 228 direkt kommuniziert. Die Batteriezell-eigenen Zellüberwachungselektroniken 228 kommunizierten untereinander beispielsweise über eine Daisy-Chain, so dass alle relevanten Batteriezell-Daten zunächst über die Daisy-Chain und dann über die Kommunikationsverbindung, die in den Figuren mit dem Bezugszeichen 225 bezeichnet ist, übertragen werden.

Die Erfindung ist jedoch nicht auf solche Batteriezell-eigene Zellüberwachungselektroniken 231 beschränkt, die innerhalb einer jeweiligen Batteriezelle 21 angeordnet sind. Alternativ ist denkbar, dass für jede Batteriezelle 21 eine entsprechende separate Zellüberwachungselektronik 231 außerhalb der Batteriezelle 21 angeordnet und mit der Batteriezelle verschaltet ist, wobei optional eine zentrale (Haupt-)Zellüberwachungselektronik vorhanden sein kann.

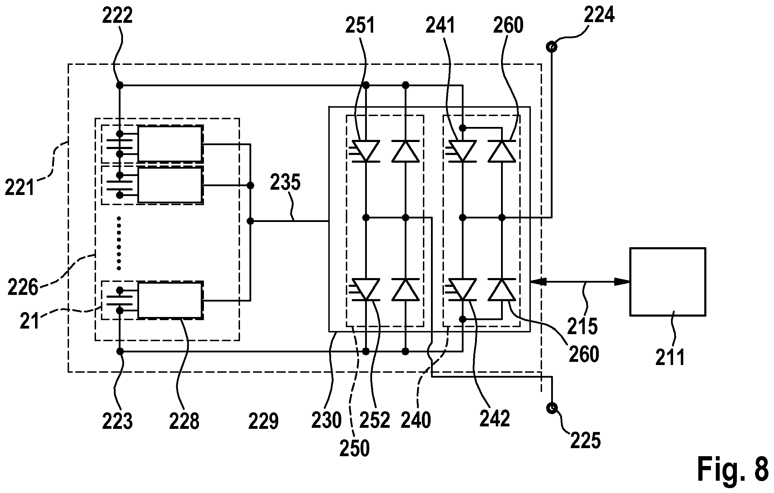

Die Figuren 8 bis 10 zeigen weitere Ausführungsformen der Erfindung, wobei bei diesen Ausführungsformen die Überwachungs- und Ansteuerungseinheit 230 direkt mit den Batteriezell-eigenen Zellüberwachungselektroniken 231 verbunden ist, ohne dass dazu eine zentrale Zellüberwachungselektronik 229 vorhanden ist.

Somit werden manche Zellüberwachungsaufgaben direkt in/auf den Batteriezellen 21 ausgeführt, wobei ermittelte Messergebnisse und Ausgaben der Zellüberwachungselektroniken 231 unmittelbar an die Überwachungs- und Ansteuerungseinheit 230 kommuniziert werden.

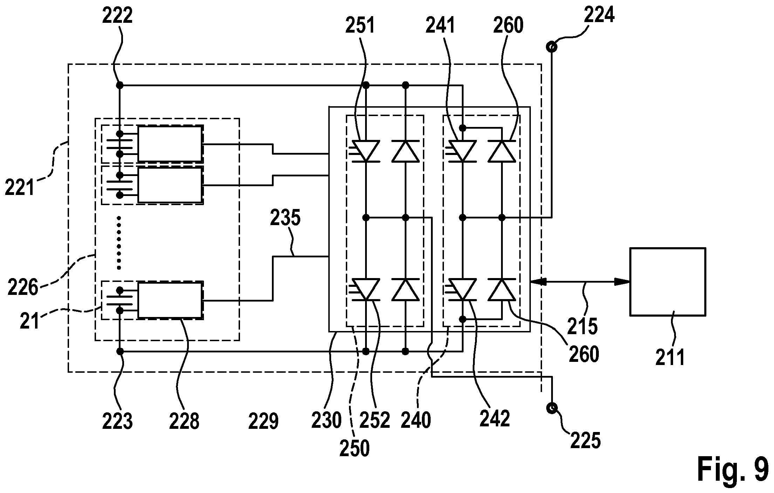

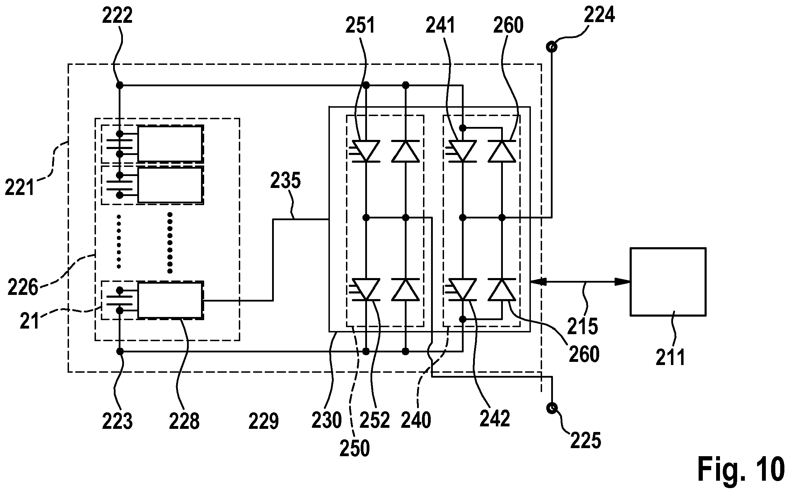

Die Kommunikation 235 zwischen der Überwachungs- und Ansteuerungseinheit 230 und den Zellüberwachungselektroniken 231 erfolgt dabei ähnlich wie bei den Ausführungsformen, die weiter oben in Verbindung mit den Figuren 5 bis 7 diskutiert wurden, mit dem Unterschied, dass der oder die entsprechenden Kommunikationsbusse an die Überwachungs- und Ansteuerungseinheit 230 und nicht an eine zentrale Zellüberwachungseinheit angeschlossen sind. So zeigt Figur 8 eine Ausführungsform der Erfindung, bei die Überwachungs- und Ansteuerungseinheit 230 über einen Bus mit den Zellüberwachungselektroniken 231 verbunden ist, und in Figur 9 sind mehrere Kommunikationsverbindungen bzw. Busse zwischen der Überwachungs- und Ansteuerungseinheit 230 einerseits und den jeweiligen Zellüberwachungselektroniken 231 andererseits vorhanden. Ferner zeigt Figur 10 ein Ausführungsbeispiel, bei denen die Zellüberwachungselektroniken 231 untereinander kommunizieren, wobei eine von den Zellüberwachungselektroniken 231 mit der Überwachungs- und Ansteuerungseinheit 230 verbunden ist.

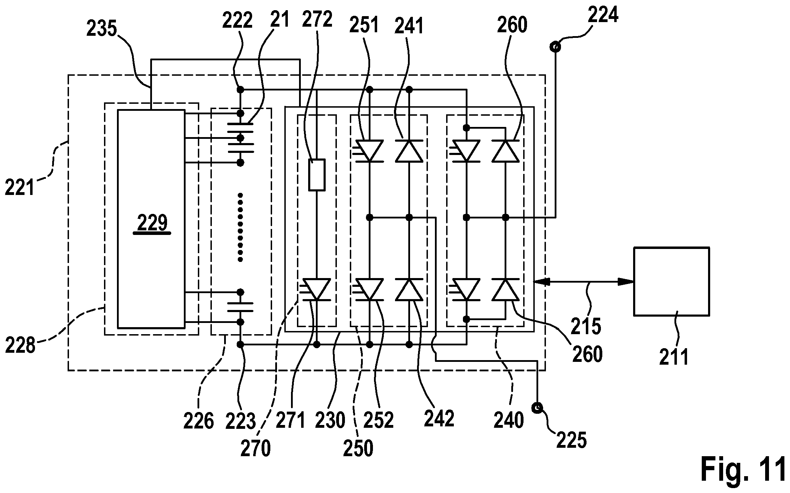

In der Figur 11 ist das Prinzipschaltbild eines Batteriemoduls 221 nach einer weiteren Ausführungsform der Erfindung dargestellt. Das Batteriemodul 221 nach dieser weiteren Ausführungsform der Erfindung unterscheidet sich von den in den Figuren 4 bis 10 dargestellten Batteriemodulen dadurch, dass das Batteriemodul 221 nunmehr zusätzlich eine Entladeschaltung 270 als eine ultraschnelle Entladevorrichtung (Ultra Fast Discharge Device) (UFDD) umfasst. Die Entladeschaltung 270 umfasst hier eine zwischen dem Pluspol 222 und dem Minuspol 223 der Batteriezellschaltung 226 angeschlossene Serienschaltung aus einem Leistungshalbleiter 271 und einem Widerstand 272 und ist in dem Batteriemodul 221 zum Entladen der Batteriezellen 21 mittels eines durch die Entladeschaltung 270 fließenden Entladestromes ausgebildet.

Wie der Fachmann erkennt, können unterschiedliche Kombinationen von einer zentralen Zellüberwachungselektronik 229 und Batteriezell-eigenen Zellüberwachungselektroniken 231 in einem Batteriemodul 221 angeordnet werden, das eine Überwachungs- und Ansteuerungseinheit 230 mit der erfindungsgemäßen Entladevorrichtung 270 aufweist. Die dabei verwendete Kommunikationstopologie ist dabei nicht auf beispielhafte, in Figur 11 gezeigte Topologie beschränkt. Denn obgleich nach Figur 11 die Verschaltungstopologie für die Kommunikation 235 zwischen der Überwachungs- und Ansteuerungseinheit 230 und der Zellüberwachungselektronik 228, 229 der in Figur 4 gezeigten Topologie entspricht, kann jedoch bei anderen Ausführungsbeispielen die Verschaltungstopologie auch beispielsweise den in Figur 5 bis 10 gezeigten Topologien entsprechen, wobei diese alternativen Ausführungsformen an dieser Stelle lediglich der Kürze halber nicht weiter diskutiert werden.

Wird bei der in Figur 11 gezeigten Ausführungsform der Überwachungs- und Ansteuerungseinheit 230 des erfindungsgemäßen eigensicheren Batteriemoduls 221 von einem Batteriemanagementsystem 211, das in einem Batteriesystem mit mehreren solchen Batteriemodulen 221 angeordnet ist, mitgeteilt, dass das Fahrzeug, in dem das erfindungsgemäße Batteriesystem angeordnet ist, einen Unfall hatte, wird das Batteriemodul 221 über die Entladeschaltung 270 schnell entladen. Um die Entladeschaltung 270 zu unterstützen, kann das Batteriemodul 221 gleichzeitig auch über die beiden Halbbrücken 240, 250 entladen werden. Um die Entladeschaltung 270 zu unterstützen, werden mittels der Überwachungs- und Ansteuerungseinheit 230 insbesondere die beiden zweiten Leistungshalbleiter 242, 252 der Halbbrücken 240, 250 eingeschaltet. Das Batteriemodul 21 gibt dann an seine Ausgangsterminals 224, 225 während der Entladung keine Spannung ab. Die Entladeschaltung 270 kann so ausgelegt sein, dass das Batteriemodul 221 mit sehr großen Entladeströmen nahe dem Kurzschluss entladen werden kann. Das Batteriemodul 21 wird damit sehr schnell in einen sicheren Zustand gebracht. Damit können auf Fahrzeugebene Situationen beherrscht werden, bei denen Batteriezellen 21 mechanisch stark deformiert oder durch spitze Gegenstände penetriert werden.

Ähnliche wie bei den in den Figuren 4 bis 10 gezeigten Ausführungsformen können unterstützend mittels der Überwachungs- und Ansteuerungseinheit 230 auch die ersten Leistungshalbleiter 241, 251 der beiden Halbbrücken 240, 250 im aktiven Betrieb als steuerbarer Widerstand betrieben werden.

Wird die Batteriezelle der erfindungsgemäßen Batteriemodul beispielsweise im Rahmen von UN Transport-Tests einem Nageleindringtest (Nail Penetration Test) oder einem Stoßtest (Crush Test) unterzogen oder befindet ich in vergleichbaren Situationen, dann erkennt die Überwachungs- und Ansteuerungseinheit 230 über die Auswertung der Batteriezellspannung, dass die Batteriezelle 21 durch Ströme entladen wird, ohne dass sie betrieben wird. Die Erkennung dieses Vorganges kann beispielsweise über einen Spannungseinbruch der Batteriezelle 21 erfolgen. Die Überwachungs- und Ansteuerungseinheit 230 löst dabei sofort das Entladen der Batteriezelle 21 über die erfindungsgemäße Entladeschaltung 270 aus und die Batteriezelle 21 wird dann im Wesentlichen über die Entladeschaltung 270 entladen.

Wird die Batteriezelle 21 der erfindungsgemäßen Batteriemodul 221 einer starken Erwärmung ausgesetzt, kann dies von der Überwachungs- und Ansteuerungseinheit 230 erkannt werden. Da die Zeitkonstanten für die Erwärmung der Batteriezellen 21 im Allgemeinen sehr groß sind, kann über die erfindungsgemäße Entladeschaltung 270 rechtzeitig eine Entladung des Batteriemoduls 221 herbeigeführt werden, bevor die Temperatur des Batteriemoduls 221 kritische Werte übersteigt. Optional kann eine Entladung des Batteriemoduls 221 auch über die beiden Halbbrücken 240, 250 erfolgen. Um die Entladeschaltung 270 zu unterstützen, werden mittels der Überwachungs- und Ansteuerungseinheit 230 insbesondere die beiden zweiten Leistungshalbleiter 242, 252 der beiden Halbbrücken 240, 250 eingeschaltet. Dadurch wird das erfindungsgemäße Batteriemodul 221 wesentlich sicherer gegenüber den aus dem heutigen Stand der Technik bekannten Batteriemodulen.

Bei den hier vorgestellten erfindungsgemäßen Batteriemodulen 221 bleibt die an den Ausgangsterminals 224, 225 anliegende Batteriezellspannung bei der Aktivierung der Sicherheitsmaßnahmen, die über die Veränderung der Schaltzustände in den Hallbrücken 240 250 geschehen, oder bei der Aktivierung der ultraschnellen Entladevorrichtung (UFDD) 270 dem Betrag nach immer kleiner als die maximal zulässige Batteriezellspannung von beispielsweise 4,2 V. Dies stellt ebenfalls eine gegenüber dem heutigen Stand der Technik erhebliche Verbesserung dar, da ansonsten beispielsweise bei der Aktivierung einer batteriezellinternen Schmelzsicherung sehr hohe negative Spannungen, die bei Elektrofahrzeugbatterien bis zu -400 V betragen können, auftreten können, die der Elektronik eines Batteriemanagementsystems große Probleme bereiten.

Die hier vorgestellten erfindungsgemäßen Batteriemodulen 221 sind nicht auf Lithium-Ionen-Batteriezellen beschränkt. Sie können auch andere Batteriezelltechnologien, wie beispielsweise für Nickel-Metallhybrid-Batteriezellen, umfassen.

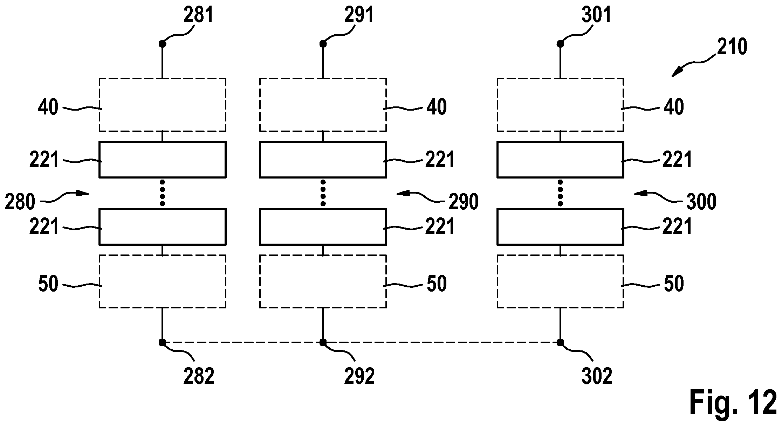

Bei den hier dargestellten erfindungsgemäßen eigensicheren Batteriemodulen 221 mit umpolbarer Ausgangsspannung können die bisher eingesetzten Überladesicherheitsvorrichtungen (Overcharge Safety Devices (OSDs) und die Batteriezellsicherung (Cell Fuses) entfallen. Die zur Erhöhung der Sicherheit bei mechanischer Deformierung oder Penetration eingesetzten Maßnahmen, wie beispielsweise das Einrichten einer Batteriezelle mit einer integrierter Nadeleindringsicherheitsvorrichtung können entweder ebenfalls entfallen oder zumindest wesentlich einfacher ausgeführt werden. Mit den hier vorgestellten erfindungsgemäßen Batteriemodulen 221 können Batteriesysteme aufgebaut werden, an dessen Batteriemanagementsysteme 211 wesentlich geringere Anforderungen als an den aus dem Stand der Technik bekannten Batteriesysteme gestellt werden. Die Elektronik der Batteriemanagementsysteme 211 kann daher voraussichtlich lediglich mit den üblichen Qualitätssicherungsmaßnahmen (ASIL-Einstufung QM) entwickelt werden und muss nicht ASIL C erfüllen. Die Sicherheit der Batteriesysteme kann gegenüber dem heutigen Stand der Technik erheblich verbessert werden. Ein Beispiel für den Einsatz der hier vorgestellten erfindungsgemäßen elektrisch eigensicheren Batteriemodule 221 ist der in der Figur 12 dargestellte Batteriedirektinverter 210.

Aufgrund der Funktionalität der hier vorgestellten erfindungsgemäßen Batteriemodule 221, die Batteriezellspannung an den Klemmen der Batteriezelle 21 umzupolen, eignen sich die erfindungsgemäßen Batteriemodule 221 insbesondere für den Einsatz in solchen Batteriedirektinvertern 210 mit stufig einstellbaren Ausgangsspannungen.

Der in der Figur 12 dargestellte Batteriedirektinverter 210 ist ein dreiphasiges Batteriesystem mit einer stufig einstellbaren Ausgangsspannung. Der Batteriedirektinverter 210 umfasst drei Batteriestränge 280, 290, 300, die jeweils eine Reihenschaltung aus mehreren erfindungsgemäßen Batteriemodulen 221 aufweisen. Diese Reihenschaltungen der Batteriestränge 20, 290, 300 sind mit den positiven Batteriestrangpolen 281, 291, 301 jeweils über eine Lade- und Trenneinrichtung 40 und mit den negativen Batteriestrangpolen 282, 292, 302 jeweils über eine Trenneinrichtung 50 verbunden.

Erfindungsgemäß werden die Batteriezellen oder Batteriemodule dabei derart angesteuert, dass sich deren Betriebsparameter innerhalb der jeweiligen Grenzwerte befinden, die für einen sicheren Betrieb notwendig sind.

So werden Lithium-Ionen-Batteriezellen typischerweise innerhalb eines Spannungsbereichs Umin bis Umax von 2,8 V bis 4,2 V, oder bevorzugt 3,0 V bis 4,2 V Volt betrieben. Dies gilt insbesondere für sicherheitsrelevante für Werte Umin_safety oder Umax_safety. Diese Angaben gelten jedoch für die zu messenden Spannungen U Batteriezelle im Leerlauf, das heißt, wenn kein Strom durch die Batteriezelle fließt. Dabei sind diese Grenzwerte unbedingt zu beachten, da ansonsten die Elektroden Beschädigungen erleiden können.

Die Leerlaufspannung der Batteriezellen hängt im Wesentlichen von deren Ladezustand ab. Dabei wird typischerweise bei einer Spannung UBatteriezelle von 2,8 V ein Ladezustand SOC von 0%, bei 3,5 V ein Ladezustand von 20%, und bei 4,2 V ein Ladezustand von 100% angenommen, wobei diese Werte jeweils von Art und Material der Kathode, der Anode, und/oder des verwendeten Elektrolyts abhängen.

Wenn ein Strom durch eine Batteriezelle fließt, können die Batteriezellspannungen UBatteriezelle von den obigen Zahlenangaben abweichen. Angenommen, die Leerlaufspannung betrage 3,5 V, und der Innenwiderstand der Batteriezelle bei 25 °C sei 10 mΩ. Bei einem Ladestrom von 100 A ergäbe das dann einen zu messenden Spannungswert UBatteriezelle von 3,5 V + 1,0 V = 4,5 V. Bei einer Temperatur von 0 °C beträgt der Innenwiderstand der Batteriezelle beispielhaft jedoch bis zu 50 mΩ, was bei einem beispielhaften Entladestrom von 50 A einen Spannungswert UBatteriezelle von 3,5 V minus 2,5 V = 1,0 V ergäbe. Aufgrund der angewandten Ansteuerung und der verwendeten Sensoren werden diese Spannungswerte bei Raumtemperatur beziehungsweise bei 0°C aber nicht erreicht. Allgemein können im Betrieb der Batteriezellen der Wert für Umax zwischen 4,2 V und 5,0 V liegen und der Wert für Umin zwischen 1,5 V und 4,2 V, vorzugsweise zwischen 1,8 V und 4,15 V, diese Werte beziehen sich jedoch nicht auf die Leerlaufspannung.

Die obigen Spannungswerte gelten für eine einzelne Batteriezelle. Für ein Batteriemodul kommt es darauf an, wie viele Zellen in Reihe oder parallel geschaltet sind. So liegt die zulässige Modul-Leerlaufspannung UBatteriemodul zwischen n x 2,8 V bis n x 4,2 V, wobei n für die Anzahl der Batteriezellen steht, die miteinander in Reihe geschaltet sind.

Grenzwerte für Temperaturen bei Lithium-Ionen-Batteriezellen liegen etwa bei Tmin = -40 °C und Tmax = 30°C bis 50 °C, bevorzugt 30°C bis 45 °C, am meisten bevorzugt 35°C bis 40°C. Aus Sicherheitsaspekten sollte eine maximale Temperatur Tmax-safety von 46°C bis 80°C, bevorzugt 50°C bis 60°C nicht überschritten werden. Ferner sollte die maximale Außentemperatur Taußen, bei der die Batteriezellen betrieben werden, 40 °C nicht übersteigen.

Die Batterieströme durch die Batteriezellen sollten nicht außerhalb eines Bereichs von -1000 A bis +1000 A, bevorzugt -600 A bis +600 A, noch mehr bevorzugt -500 A bis +500 A, noch mehr bevorzugt -450 A bis +450 A, und noch mehr bevorzugt -350 A bis +350 A, liegen.

Der Innendruck einer Batteriezelle sollte den Druckbereich von 2 bar bis 8 bar, bevorzugt 3 bar bis 7 bar, nicht verlassen.

Die obige Diskussion wurde beispielhaft für Lithium-Ionen-Batteriezellen beziehungsweise Lithium-Ionen-Batteriemodule geführt, wobei die angegebenen Werte insbesondere für Lithium-Ionen-Batteriezellen mit Lithium-Mangan-KobaltOxid als Aktivmaterial für die Kathode gelten. Jedoch ist die Erfindung jedoch nicht auf solche Batteriezellen, insbesondere nicht auf Lithium-Ionen-Batteriezellen beschränkt. In der Praxis hängen die Zahlenwerte der zu wählenden Betriebsparameter somit vom jeweiligen Batteriezelltyp ab.

Neben der voranstehenden schriftlichen Offenbarung wird hiermit zur weiteren Offenbarung der Erfindung ergänzend auf die Darstellung in den Figuren 1 bis 12 Bezug genommen.

## Patentansprüche

1. Batteriemodul (221) mit einer Batteriezellschaltung (226) aus mehreren Batteriezellen (21) und mit einer Überwachungs- und Ansteuerungseinheit (230) zur Überwachung des Funktionszustands des Batteriemoduls (221), wobei in dem Batteriemodul (221) eine Koppeleinheit mit zwei Halbbrücken (240, 250) angeordnet ist, die jeweils einen mit einem Pluspol (222) der Batteriezellschaltung (226) gekoppelten ersten Leistungshalbleiter (241, 251), einen mit einem Minuspol (223) der Batteriezellschaltung (226) gekoppelten zweiten Leistungshalbleiter (242, 252) und einen Mittelanschluss umfassen und über den jeweiligen Mittelanschluss mit einem jeweils anderen Ausgangsterminal (224, 225) des Batteriemoduls (221) verbunden sind, wobei das Batteriemodul (221) eingerichtet ist, in einem Normalbetrieb die Koppeleinheit (227) mittels Ansteuerung durch die Überwachungs- und Ansteuerungseinheit (230) derartig zu betreiben, dass der erste Leistungshalbleiter (241, 251) einer der beiden Halbbrücken (240, 250) und der zweite Leistungshalbleiter (252, 242) der anderen Halbbrücke (240, 250) eingeschaltet sind und die anderen Leistungshalbleiter (242, 251, 241, 252) der Halbbrücken (240, 250) ausgeschaltet sind, so dass eine Batteriemodulspannung an den Ausgangsterminals (224, 225) des Batteriemoduls (221) wahlweise in positiver oder negativer Orientierung anliegt,
**dadurch gekennzeichnet, dass**
die Überwachungs- und Ansteuerungseinheit (230) ausgebildet ist, anhand von, insbesondere durch ein Batteriemanagementsystem, kommunizierter Information und/oder einer Auswertung einer gemessenen Zelltemperatur oder Batteriemodultemperatur und/oder einer Auswertung der Batteriemodulspannung das Vorliegen einer Gefahrsituation, insbesondere bei einer einen vorbestimmten Temperaturgrenzwert überschreitenden Zelltemperatur oder Batteriemodultemperatur und/oder einem Spannungseinbruch der Batteriemodulspannung, zu erkennen und bei Vorliegen der Gefahrsituation zum Entladen des Batteriemoduls (221) die Koppeleinheit derartig anzusteuern, dass bei mindestens einer der Halbbrücken (240, 250) der jeweilige erste Leistungshalbleiter (241, 251) oder der jeweilige zweite Leistungshalbleiter (242, 252) eingeschaltet ist und der jeweilige andere Leistungshalbleiter (241, 242, 251, 252) in einen aktiven Betrieb als steuerbarer Widerstand versetzt ist.

2. Batteriemodul (221) nach Anspruch 1, wobei das Batteriemodul (221) ferner eingerichtet ist, in dem Normalbetrieb die Koppeleinheit durch die Überwachungs- und Ansteuerungseinheit (230) derartig anzusteuern, dass die ersten Leistungshalbleiter (241, 251) eingeschaltet oder die zweiten Leistungshalbleiter (242, 252) eingeschaltet sind, so dass an den Ausgangsterminals (224, 225) des Batteriemoduls (221) keine Batteriemodulspannung anliegt.

3. Batteriemodul (221) nach einem der Ansprüche 1 oder 2, wobei die Überwachungs- und Ansteuerungseinheit (230) ausgebildet ist, eine Batteriezellspannung und/oder eine Batteriemodulspannung und/oder einen durch das Batteriemodul fließenden Strom zu überwachen und bei Vorliegen einer Batteriezellspannung oder Batteriemodulspannung, deren Betrag einen oberen Spannungsgrenzwert überschreitet, und/oder bei Vorliegen einer Batteriezellspannung und/oder Batteriemodulspannung, deren Betrag einen unteren Spannungsgrenzwert unterschreitet, und/oder bei Vorliegen eines Ladestroms, dessen Betrag einen vorbestimmten Ladestromgrenzwert überschreitet, und/oder bei Vorliegen eines Entladestroms, dessen Betrag einen vorbestimmten Entladestromgrenzwert überschreitet, die Leistungshalbleiter (241, 242, 251, 252) der Koppeleinheit zum Einstellen eines Funktionszustands des Batteriemoduls (221), in dem durch das Batteriemodul (221) kein Strom fließt, derartig anzusteuern, dass die ersten Leistungshalbleiter (241, 251) oder die zweiten Leistungshalbleiter (242, 252) der Halbbrücken (240, 250) eingeschaltet und die zweiten Leistungshalbleiter (242, 252) beziehungsweise die ersten Leistungshalbleiter (241, 251) der Halbbrücken (240, 250) ausgeschaltet sind.

4. Batteriemodul (221) nach einem der vorangehenden Ansprüche, wobei das Batteriemodul (221) eine mit der Batteriezellschaltung (226) gekoppelte Entladeschaltung (270), insbesondere eine Entladeschaltung (270) mit einer Serienschaltung aus einem Leistungshalbleiter (271) und einem Widerstand (272), umfasst und dazu eingerichtet ist, bei Vorliegen einer Gefahrsituation die Entladeschaltung (270) derartig anzusteuern, dass ein Entladen des Batteriemoduls (221) mittels der Entladeschaltung (270), insbesondere ein Entladen des Batteriemoduls (221) mit einem durch die Entladeschaltung (270) fließenden Entladestrom, der einem vorbestimmten Bruchteil eines Kurzschlussstroms des Batteriemodul (221) entspricht, erfolgen kann.

5. Verfahren zum Überwachen eines Batteriemoduls (221) mit mehreren Batteriezellen (21) mittels einer in dem Batteriemodul (221) angeordneten Überwachungs- und Ansteuerungseinheit (230), wobei das Batteriemodul (221) mittels einer in dem Batteriemodul (221) angeordneten Koppeleinheit betrieben wird, die zwei eine Vollbrücke bildende Halbbrücken (240, 250) aus Leistungshalbleitern (241, 242, 251, 252) umfasst, wobei, falls durch die Überwachungs- und Ansteuerungseinheit (230) eine von einem Normalbetrieb des Batteriemoduls (221) abweichende Fehlersituation oder Gefahrsituation festgestellt wird, das Batteriemodul (221) mittels einer Ansteuerung der Koppeleinheit in einen sicheren Zustand versetzt wird,
**dadurch gekennzeichnet, dass**
bei Vorliegen der Gefahrsituation die Koppeleinheit derartig zum Entladen des Batteriemoduls (221) angesteuert wird, dass bei mindestens einer der Halbbrücken (240, 250) jeweils ein Leistungshalbleiter (241,251) eingeschaltet und der jeweilige andere Leistungshalbleiter (242, 252) in einem aktiven Betrieb als steuerbarer Widerstand betrieben wird.

6. Verfahren nach Anspruch 5, wobei mittels der Überwachungs- und Ansteuerungseinheit (230) eine Batteriezellspannung und/oder Batteriemodulspannung und/oder ein durch das Batteriemodul fließender Strom überwacht wird und bei Vorliegen einer Batteriezellspannung oder Batteriemodulspannung, deren Betrag einen oberen Spannungsgrenzwert überschreitet, und/oder einer Batteriezellspannung oder Batteriemodulspannung, deren Betrag einen unteren Spannungsgrenzwert unterschreitet, und/oder bei Vorliegen eines Ladestroms, dessen Betrag einen vorbestimmten Ladestromgrenzwert überschreitet, und/oder bei Vorliegen eines Entladestroms, dessen Betrag einen vorbestimmten Entladestromgrenzwert überschreitet, die Leistungshalbleiter (241, 242, 251, 252) der Koppeleinheit in einen Schaltzustand versetzt werden, bei dem durch das Batteriemodul (221) kein Strom fließt.

7. Verfahren nach Anspruch 5 oder 6, wobei durch die Überwachungs- und Ansteuerungseinheit (230) das Vorliegen einer Gefahrsituation, insbesondere bei einer einen vorbestimmten Temperaturgrenzwert überschreitenden Zelltemperatur oder Batteriemodultemperatur und/oder einem Spannungseinbruch der Batteriezellspannung oder Batteriemodulspannung, anhand insbesondere einer durch das Batteriemanagementsystem kommunizierten Information und/oder einer Auswertung einer gemessenen Zelltemperatur oder Batteriemodultemperatur und/oder einer Auswertung der Batteriezellspannung oder Batteriemodulspannung bestimmt wird.

8. Verfahren nach Anspruch 5 bis 7, wobei bei Vorliegen der Gefahrsituation das Batteriemodul (221) mittels einer Entladeschaltung (270) mit einem durch die Entladeschaltung (270) fließenden Entladestrom, insbesondere der einem vorbestimmten Bruchteil eines Kurzschlussstroms der Batteriemoduls (221) entspricht, entladen wird.

9. Batteriesystem (210), das eine Batterie mit mindestens einem Batteriestrang (280, 290, 300), in dem mehrere Batteriemodule (221) nach einem der Ansprüche 1 bis 4 angeordnet sind, und ein Batteriemanagementsystem (211) umfasst, wobei das Batteriemanagementsystem (211) dazu ausgebildet ist, mit den Überwachungs- und Ansteuerungseinheiten (230) der Batteriemodule (221) zu kommunizieren.

## Claims

1. Battery module (221) having a battery cell circuit (226) comprising a plurality of battery cells (21) and having a monitoring and actuation unit (230) for monitoring the functional state of the battery module (221), wherein a coupling unit with two half-bridges (240, 250) is arranged in the battery module (221), which half-bridges each comprise a first power semiconductor (241, 251) which is coupled to a positive pole (222) of the battery cell circuit (226), a second power semiconductor (242, 252) which is coupled to a negative pole (223) of the battery cell circuit (226), and a central connection and are connected to a respective other output terminal (224, 225) of the battery module (221) via the respective central connection, wherein the battery module (221) is designed, during normal operation, to operate the coupling unit (227) by means of actuation by the monitoring and actuation unit (230) in such a way that the first power semiconductor (241, 251) of one of the two half-bridges (240, 250) and the second power semiconductor (252, 242) of the other half-bridge (240, 250) are switched on and the other power semiconductors (242, 251, 241, 252) of the half-bridges (240, 250) are switched off, so that a battery module voltage is applied to the output terminals (224, 225) of the battery module (221) selectively with a positive or negative orientation,
**characterized in that**
the monitoring and actuation unit (230) is designed to identify, on the basis of information which is communicated, in particular, by a battery management system and/or evaluation of a measured cell temperature or battery module temperature and/or evaluation of the battery module voltage, the presence of a hazardous situation, in particular in the case of a cell temperature or battery module temperature which exceeds a predetermined temperature limit value and/or a dip in the battery module voltage, and, if the hazardous situation is present, to actuate the coupling unit, for the purpose of discharging the battery module (221), in such a way that, in at least one of the half-bridges (240, 250), the respective first power semiconductor (241, 251) or the respective second power semiconductor (242, 252) is switched on and the respective other power semiconductor (241, 242, 251, 252) is switched to active operation as a controllable resistor.

2. Battery module (221) according to Claim 1, wherein the battery module (221) is further designed, during normal operation, to actuate the coupling unit by way of the monitoring and actuation unit (230) in such a way that the first power semiconductors (241, 251) are switched on or the second power semiconductors (242, 252) are switched on, so that no battery module voltage is applied to the output terminals (224, 225) of the battery module (221).

3. Battery module (221) according to either of Claims 1 and 2, wherein the monitoring and actuation unit (230) is designed to monitor a battery cell voltage and/or a battery module voltage and/or a current flowing through the battery module, and, if a battery cell voltage or battery module voltage is present and the magnitude thereof exceeds an upper voltage limit value and/or if a battery cell voltage and/or battery module voltage is present and the magnitude thereof undershoots a lower voltage limit value and/or if a charge current is present and the magnitude thereof exceeds a predetermined charge current limit value and/or if a discharge current is present and the magnitude thereof exceeds a predetermined discharge current limit value, to actuate the power semiconductors (241, 242, 251, 252) of the coupling unit, for the purpose of setting a functional state of the battery module (221) in which no current flows through the battery module (221), in such a way that the first power semiconductors (241, 251) or the second power semiconductors (242, 252) of the half-bridges (240, 250) are switched on and the second power semiconductors (242, 252) or the first power semiconductors (241, 251) of the half-bridges (240, 250) are switched off.

4. Battery module (221) according to one of the preceding claims, wherein the battery module (221) comprises a discharge circuit (270) which is coupled to the battery cell circuit (226), in particular a discharge circuit (270) having a series circuit comprising a power semiconductor (271) and a resistor (272), and is designed, when a hazardous situation is present, to actuate the discharge circuit (270) in such a way that discharging of the battery module (221) can be performed by means of the discharge circuit (270), in particular discharging of the battery module (221) with a discharge current flowing through the discharge circuit (270), which discharge current corresponds to a predetermined fraction of a short-circuit current of the battery module (221) .

5. Method for monitoring a battery module (221) having a plurality of battery cells (21) by means of a monitoring and actuation unit (230) which is arranged in the battery module (221), wherein the battery module (221) is operated by means of a coupling unit which is arranged in the battery module (221) and comprises two half-bridges (240, 250), which form a full bridge, comprising power semiconductors (241, 242, 251, 252), wherein, if a fault situation or hazardous situation which differs from normal operation of the battery module (221) is established by the monitoring and actuation unit (230), the battery module (221) is switched to a safe state by means of actuation of the coupling unit,
**characterized in that**,
when the hazardous situation is present, the coupling unit is actuated, for the purpose of discharging the battery module (221), in such a way that, in at least one of the half-bridges (240, 250), in each case one power semiconductor (241, 251) is switched on and the respective other power semiconductor (242, 252) is operated in active operation as a controllable resistor.

6. Method according to Claim 5, wherein a battery cell voltage and/or battery module voltage and/or a current flowing through the battery module is monitored by means of the monitoring and actuation unit (230) and, when a battery cell voltage or battery module voltage is present and the magnitude thereof exceeds an upper voltage limit value and/or when a battery cell voltage or battery module voltage is present and the magnitude thereof undershoots a lower voltage limit value and/or when a charge current is present and the magnitude thereof exceeds a predetermined charge current limit value and/or when a discharge current is present and the magnitude thereof exceeds a predetermined discharge current limit value, the power semiconductors (241, 242, 251, 252) of the coupling unit are switched to a switching state in which no current flows through the battery module (221).

7. Method according to Claim 5 or 6, wherein the presence of a hazardous situation, in particular in the case of a cell temperature or battery module temperature which exceeds a predetermined temperature limit value and/or a dip in the battery cell voltage or battery module voltage, is determined by the monitoring and actuation unit (230) on the basis of, in particular, an item of information which is communicated by the battery management system and/or evaluation of a measured cell temperature or battery module temperature and/or evaluation of the battery cell voltage or battery module voltage.

8. Method according to Claims 5 to 7, wherein, when the hazardous situation is present, the battery module (221) is discharged by means of a discharge circuit (270) with a discharge current flowing through the discharge circuit (270), in particular which discharge current corresponds to a predetermined fraction of a short-circuit current of the battery module (221).

9. Battery system (210) which comprises a battery having at least one battery line (280, 290, 300) in which a plurality of battery modules (221) according to one of Claims 1 to 4 are arranged, and a battery management system (211), wherein the battery management system (211) is designed to communicate with the monitoring and actuation units (230) of the battery modules (221).

## Revendications

1. Module de batterie (221), comprenant un circuit de cellules de batterie (226) composé de plusieurs cellules de batterie (21), et comprenant une unité de surveillance et d'attaque (230) destinée à surveiller l'état de fonctionnement du module de batterie (221), une unité de couplage comprenant deux demi-ponts (240, 250) étant disposée dans le module de batterie (221), lesquels demi-ponts comportent respectivement un premier semiconducteur de puissance (241, 251) connecté à un pôle positif (222) du circuit de cellules de batterie (226), un deuxième semiconducteur de puissance (242, 252) connecté à un pôle négatif (223) du circuit de cellules de batterie (226) et une borne centrale et sont reliés à une autre borne de sortie (224, 225) respective du module de batterie (221) par le biais de la borne centrale respective, le module de batterie (221) étant conçu pour, dans un mode normal, faire fonctionner l'unité de couplage (227) au moyen d'une attaque par l'unité de surveillance et d'attaque (230) de telle sorte que le premier semiconducteur de puissance (241, 251) de l'un des deux demi-ponts (240, 250) et le deuxième semiconducteur de puissance (252, 242) de l'autre demi-pont (240, 250) sont mis en circuit et les autres semiconducteurs de puissance (242, 251, 241, 252) des demi-ponts (240, 250) sont mis hors circuit, de sorte qu'une tension du module de batterie aux bornes de sortie (224, 225) du module de batterie (221) est présente sélectivement dans une orientation positive ou négative,
**caractérisé en ce que**
l'unité de surveillance et d'attaque (230) est configurée pour, à l'aide d'informations communiquées, notamment par un système de gestion de batterie, et/ou d'une interprétation d'une température de cellule ou d'une température de module de batterie mesurée et/ou d'une interprétation de la tension de module de batterie, reconnaître la présence d'une situation de danger, notamment dans le cas d'une température de cellule ou d'une température de module de batterie qui dépasse une valeur limite de température prédéterminée et/ou d'une chute de tension de la tension de module de batterie et, en présence de la situation de danger, pour attaquer l'unité de couplage en vue de décharger le module de batterie (221) de telle sorte que pour au moins l'un des demi-ponts (240, 250), le premier semiconducteur de puissance (241, 251) respectif ou le deuxième semiconducteur de puissance (242, 252) respectif soit mis en circuit et l'autre semiconducteur de puissance (241, 242, 251, 252) respectif est placé dans un mode actif en tant que résistance commandable.

2. Module de batterie (221) selon la revendication 1, le module de batterie (221) étant en outre conçu pour, en mode normal, attaquer l'unité de couplage par l'unité de surveillance et d'attaque (230) de telle sorte que les premiers semiconducteurs de puissance (241, 251) sont mis en circuit ou les deuxièmes semiconducteurs de puissance (242, 252) sont mis en circuit, de sorte qu'aucune tension de module de batterie ne soit présente aux bornes de sortie (224, 225) du module de batterie (221).

3. Module de batterie (221) selon l'une des revendications 1 et 2, l'unité de surveillance et d'attaque (230) étant conçue pour surveiller une tension de cellule de batterie et/ou une tension de module de batterie et/ou un courant qui circule à travers le module de batterie et, en présence d'une tension de cellule de batterie ou d'une tension de module de batterie dont la valeur est supérieure à une valeur limite de tension haute, et/ou en présence d'une tension de cellule de batterie ou d'une tension de module de batterie dont la valeur est inférieure à une valeur limite de tension basse, et/ou en présence d'un courant de charge dont la valeur est supérieure à une valeur limite de courant de charge prédéterminée, et/ou en présence d'un courant de décharge dont la valeur est supérieure à une valeur limite de courant de décharge prédéterminée, attaquer les semiconducteurs de puissance (241, 242, 251, 252) de l'unité de couplage en vue d'établir un état de fonctionnement du module de batterie (221) dans lequel aucun courant ne circule à travers le module de batterie (221), de sorte que les premiers semiconducteurs de puissance (241, 251) ou les deuxièmes semiconducteurs de puissance (242, 252) des demi-ponts (240, 250) sont mis en circuit et les deuxièmes semiconducteurs de puissance (242, 252) ou les premiers semiconducteurs de puissance (241, 251) des demi-ponts (240, 250) sont mis hors circuit.

4. Module de batterie (221) selon l'une des revendications précédentes, le module de batterie (221) comportant un circuit de décharge (270) connecté au circuit de cellules de batterie (226), notamment un circuit de décharge (270) comprenant un circuit série composé d'un semiconducteur de puissance (271) et d'une résistance (272), et étant conçu pour, en présence d'une situation de danger, attaquer le circuit de décharge (270) de telle sorte qu'une décharge du module de batterie (221) peut avoir lieu au moyen du circuit de décharge (270), notamment une décharge du module de batterie (221) avec un courant de décharge qui circule à travers le circuit de décharge (270) et qui correspond à une fraction prédéterminée d'un courant de court-circuit du module de batterie (221).

5. Procédé de surveillance d'un module de batterie (221) comprenant plusieurs cellules de batterie (21) au moyen d'une unité de surveillance et d'attaque (230) disposée dans le module de batterie (221), le module de batterie (221) fonctionnant au moyen d'une unité de couplage disposée dans le module de batterie (221), laquelle comporte deux demi-ponts (240, 250) composés de semiconducteurs de puissance (241, 242, 251, 252) formant un pont entier, le module de batterie (221) étant amené dans un état sécurisé au moyen d'une attaque de l'unité de couplage dans le cas où une situation de défaut ou une situation de danger différente d'un fonctionnement normal du module de batterie (221) est constatée par l'unité de surveillance et d'attaque (230),
**caractérisé en ce que**
en présence de la situation de danger, l'unité de couplage est attaquée pour décharger le module de batterie (221) de telle sorte que pour au moins l'un des demi-ponts (240, 250), un semiconducteur de puissance (241, 251) respectif est mis en circuit et l'autre semiconducteur de puissance (242, 252) respectif fonctionne dans un mode actif en tant que résistance commandable.

6. Procédé selon la revendication 5, une tension de cellule de batterie et/ou une tension de module de batterie et/ou un courant qui circule à travers le module de batterie étant surveillés au moyen de l'unité de surveillance et d'attaque (230) et, en présence d'une tension de cellule de batterie ou d'une tension de module de batterie dont la valeur est supérieure à une valeur limite de tension haute, et/ou en présence d'une tension de cellule de batterie ou d'une tension de module de batterie dont la valeur est inférieure à une valeur limite de tension basse, et/ou en présence d'un courant de charge dont la valeur est supérieure à une valeur limite de courant de charge prédéterminée, et/ou en présence d'un courant de décharge dont la valeur est supérieure à une valeur limite de courant de décharge prédéterminée, les semiconducteurs de puissance (241, 242, 251, 252) de l'unité de couplage sont amenés dans un état de commutation avec lequel aucun courant ne circule à travers le module de batterie (221).

7. Procédé selon la revendication 5 ou 6, la présence d'une situation de danger étant déterminée par l'unité de surveillance et d'attaque (230), notamment dans le cas d'une température de cellule ou d'une température de module de batterie qui dépasse une valeur limite de température prédéterminée et/ou d'une chute de tension de la tension de cellule de batterie ou de la tension de module de batterie, à l'aide notamment d'une information communiquée par le système de gestion de batterie et/ou d'une interprétation d'une température de cellule ou d'une température de module de batterie mesurée et/ou d'une interprétation de la tension de cellule de batterie ou de la tension de module de batterie.

8. Procédé selon les revendications 5 à 7, en présence de la situation de danger, le module de batterie (221) étant déchargé au moyen d'un circuit de décharge (270) avec un courant de décharge qui circule à travers le circuit de décharge (270), lequel correspond notamment à une fraction prédéterminée d'un courant de court-circuit du module de batterie (221).

9. Système de batterie (210), lequel comporte une batterie comprenant au moins une branche de batterie (280, 290, 300) dans laquelle sont disposés plusieurs modules de batterie (221) selon l'une des revendications 1 à 4, et un système de gestion de batterie (211), le système de gestion de batterie (211) étant configuré pour communiquer avec les unités de surveillance et d'attaque (230) des modules de batterie (221) .
